**Europäisches Patentamt**

**European Patent Office**

**Office européen des brevets**

(19)

(11) Veröffentlichungsnummer : **0 348 648 B1**

# EUROPÄISCHE PATENTSCHRIFT

(12)

(45) Veröffentlichungstag der Patentschrift :
**29.01.92 Patentblatt 92/05**

(51) Int. Cl.$^5$ : **B60T 13/14**

(21) Anmeldenummer : **89108696.9**

(22) Anmeldetag : **16.05.89**

(54) Bremsgerät.

(30) Priorität : **28.06.88 DE 3821730**

(43) Veröffentlichungstag der Anmeldung :
**03.01.90 Patentblatt 90/01**

(45) Bekanntmachung des Hinweises auf die
Patenterteilung :
**29.01.92 Patentblatt 92/05**

(84) Benannte Vertragsstaaten :
**ES FR GB IT SE**

(56) Entgegenhaltungen :
**EP-A- 0 183 997**
**DE-A- 3 444 829**
**DE-A- 3 700 697**
**DE-A- 3 700 698**
**DE-C- 3 632 507**
**GB-A- 2 142 398**

(73) Patentinhaber : **DAIMLER-BENZ**
**AKTIENGESELLSCHAFT**
**Mercedesstrasse 136**
**W-7000 Stuttgart 60 (DE)**

(72) Erfinder : **Resch, Reinhard**
**Rohrdommelweg 2**
**W-7000 Stuttgart 50 (DE)**

Jouve, 18, rue Saint-Denis, 75001 PARIS

EP 0 348 648 B1

## Beschreibung

Die Erfindung betrifft ein Bremsgerät für ein Straßenfahrzeug mit hydraulischer Zweikreis-Bremsanlage und mit den weiteren, im Oberbegriff des Patentanspruchs 1 genannten, gattungsbestimmenden Merkmalen.

Ein derartiges Bremsgerät ist durch die Deutsche Patentschrift Nr. 3632507 bekannt.

Das bekannte Bremsgerät ist für eine Bremsanlage mit einem statischen Vorderachs-Bremskreis und einem statischen Hinterachs-Bremskreis gedacht, die an einen Primär-Ausgangsdruckraum bzw. einen Sekundär-Ausgangsdruckraum des Bremsgeräts angeschlossen sind. In diesen Ausgangsdruckräumen ist, gesteuert durch die Betätigungskraft $K_P$, mit der der Fahrer ein Bremspedal betätigt, Bremsdruck aufbaubar. In das Bremsgerät ist ein hydraulischer Bremskraftverstärker integriert, der ein Bremsventil umfaßt, das einen zu der Kraft K, mit der der Fahrer das Bremspedal betätigt, proportionalen Ausgangsdruck liefert, der von einer Hilfsdruckquelle abgeleitet wird. Dieser Pedalkraft-proportionale Ausgangsdruck ist in einen Antriebsdruckraum einkoppelbar, der beweglich durch einen als Ringkolben ausgebildeten Antriebskolben begrenzt ist, der durch die Druckbeaufschlagung des Antriebsdruckraumes eine Verschiebung erfährt, die über ein flanschförmiges Axialkraft-Übertragungselement eines Tauchkolbens, der den Ringkolben axial durchsetzt, gegen diesen verschiebbar abgedichtet ist und zusammen mit dem Ringkolben die Primär-Kolbenanordnung bildet, welche die einseitig bewegliche Begrenzung des Primär-Ausgangsdruckraumes bildet, an den der Vorderachs-Bremskreis angeschlossen ist. Durch den im Primär-Ausgangsdruckraum erfolgenden Druckaufbau wird — mittelbar — ein Schwimmkolben verschoben, der den Primär-Ausgangsdruckraum gegen einen Steuerdruckraum abgrenzt, in welchem durch die Verschiebung des Schwimmkolbens ein im Druck im Primär-Ausgangsdruckraum entsprechender Druck aufgebaut wird. Diese Kolben und Druckräume sind entlang einer gemeinsamen zentralen Längsachse angeordnet, entlang welcher auch eine Druckstange verschiebbar geführt ist, über die, falls der Bremskraftverstärker ausgefallen ist, die Pedalkraft auf den zentralen Tauchkolben der Primär-Kolbenanordnung übertragbar ist, dessen wirksame Querschnittsfläche kleiner ist als diejenige des Ringkolbens. Der in dem Steuerdruckraum aufbaubare Druck wird über einen Querkanal des Gehäuses des bekannten Bremsgeräts in einen zweiten Steuerdruckraum eingekoppelt, der gehäusefest durch eine Gehäusebohrung begrenzt ist, deren zentrale Längsachse parallel zu der zentralen Längsachse verläuft, entlang welcher die vorgenannten Kolben und Druckräume angeordnet sind. Dieser zweite Steuerdruckraum ist einseitig beweglich durch einen Antriebskolben begrenzt, der seinerseits an einem stößelförmigen Fortsatz des Sekundärkolbens angreift, der die bewegliche Begrenzung des Sekundär-Ausgangsdruckraumes bildet, an den der Hinterachs-Bremskreis angeschlossen ist. Diese gleichsam "abgeknickte" Bauweise des Bremsgeräts mit hydraulisch in Reihe geschalteten Primär- und Sekundär-Ausgangsdruckräumen ist gewählt, um eine in axialer Richtung kurze Bauweise zu ermöglichen.

Durch die zweiteilige Ausbildung der Primär-Kolbenanordnung wird erreicht, daß bei einem Ausfall des Bremskraftverstärkers ein "Übersetzungssprung" auftritt, derart, daß bei einem Ausfall des Bremskraftverstärkers, d.h. wenn zur Bremsen-Betätigung allein noch die Pedalkraft zur Verfügung steht, ein sogenannter "Übersetzungssprung" auftritt, derart, daß bei verlängertem Pedalweg ein relativ höherer Bremsdruck aufgebaut werden kann. Des weiteren ist der den Primär-Ausgangsdruckraum gegen den ersten Steuerdruckraum abgrenzende Schwimmkolben so ausgebildet, daß bei einem Ausfall sowohl der Bremskraftverstärkung als auch des Vorderachs-Bremskreises der Tauchkolben an einem axialen Fortsatz des Schwimmkolbens zur Anlage gelangen kann, so daß der Schwimmkolben durch Pedalkraft verschiebbar ist und dadurch im Hinterachs-Bremskreis ein Bremsdruck aufgebaut werden kann, wobei dadurch, daß der Schwimmkolben eine wirksame Querschnittsfläche hat, die kleiner ist als die Gesamtquerschnittsfläche der Primär-Kolbenanordnung ein "Drucksprung" wirksam wird, derart, daß der im genannten Fehlfunktionsfall im Hinterachs-Bremskreis aufbaubare Bremsdruck relativ höher ist als im fehlfunktionsfreien Fall.

Gleichwohl ist das bekannte Bremsgerät mit dem unter Sicherheitsaspekten als gravierend anzusehenden Nachteil behaftet, daß, wenn "zwischen" den durch die Querbohrung miteinander verbundenen Steuerdruckräumen ein Leck auftritt, es nicht mehr möglich ist, den Hinterachs-Bremskreis zu betätigen. Dasselbe gilt, wenn die durch den Querkanal miteinander verbundenen Steuerdruckräume schlecht entlüftet sind. Bei der für das bekannte Bremsgerät charakteristischen Bauweise ist es auch prinzipiell ausgeschlossen, daß der den Sekundär-Ausgangsdruckraum beweglich begrenzende Kolben "mechanisch" über das Bremspedal, gleichsam als letzte Notmöglichkeit, betätigt werden kann. Das bekannte Bremsgerät ist daher weniger funktionssicher als ein konventioneller Tandem-Hauptzylinder, dessen Nachteil darin zu sehen ist, daß er eine verhältnismäßig große axiale Baulänge benötigt, die dem beengten Einbauraum vielfach nicht zur Verfügung steht.

Aufgabe der Erfindung ist es daher, ein Bremsgerät der eingangs genannten Art dahingehend zu verbessern, daß es bei gleichwohl gegenüber einem konventionellen Tandem-Hauptzylinder reduzierter axialer Baulänge in den Notfall einer Fehlfunktion des Bremskraftverstärkers und/oder eines Ausfalls des Vorderachs-Bremskreises hinsichtlich der dann noch erzielbaren Bremskräfte bzw. Fahrzeugverzögerung dieselbe Sicherheit bietet wie ein konventioneller Tandem-Hauptzylinder und dabei gleichwohl einfach aufgebaut und kostengünstig realisierbar ist.

Diese Aufgabe wird erfindungsgemäß durch die im kennzeichnenden Teil des Patentanspruchs genannten Merkmale gelöst.

Hiernach umfaßt der Primär-Ausgangsdruckraum einen ersten Teilraum, der einseitig beweglich durch ein Kolbenelement der Primärkolben-Anordnung, im übrigen gehäusefest durch die eine axiale Bohrung des Gehäuses begrenzt ist. Weiter umfaßt der Primär-Ausgangsdruckraum einen zweiten, mit dem ersten Teilraum in ständig-kommunizierender Verbindung stehenden Teilraum, der innerhalb der zweiten Gehäusebohrung axial beidseitig beweglich begrenzt ist. Diese axialen Begrenzungen bilden zum einen der Sekundärkolben und zum anderen zwei druckdicht gegeneinander verschiebbare Kolbenelemente der Primärkolben-Anordnung, deren eines als Ringkolben ausgebildet ist, der gegen die Gehäusebohrung verschiebbar abgedichtet ist, und deren zweites als Tauchkolben ausgebildet ist, der in einer axialen Durchgangsbohrung des Ringkolbens druckdicht verschiebbar angeordnet ist. Es ist ein erstes, jochförmiges Axialkraft-Übertragungselement vorgesehen, das eine kraft-formschlüssige Bewegungskopplung des den ersten Teilraum des Primär-Ausgangsdruckraumes begrenzenden Primärkolbens mit nur einem der beiden Kolbenelemente vermittelt, die den zweiten Teilraum des Primär-Ausgangsdruckraumes einseitig beweglich begrenzen. Weiter ist ein zweites Axialkraft-Übertragungselement vorgesehen, das die kraft-formschlüssige Bewegungskopplung des anderen Kolbenelements bzw. der den zweiten Teilraum begrenzenden Primärkolbenelemente mit dem Antriebskolben des Bremskraftverstärkers vermittelt, und es ist schließlich ein drittes Axialkraft-Übertraungselement vorgesehen, über das bei einen Ausfall des Bremskraftverstärkers die mittels des Bremspedals ausübbare Betätigungskraft auf das jochförmige Axialkraft-Übertragungselement direkt einwirkt. Durch diese Bauweise des erfindungsgemäßen Bremsgeräts ist gewährleistet, daß bei einem gleichzeitigen Ausfall des Bremskraftverstärkers und des Vorderachs-Bremskreises der den Sekundär-Ausgangsdruckraum des Bremsgeräts, an den der Hinterachs-Bremskreis angeschlossen ist, begrenzende Sekundär-Kolben mechanisch, d.h. mit dem Bremspedal bewegungsgekoppelt, verschiebbar bleibt und dadurch auch in einem extremen Notfall das Fahrzeug bremsbar bleibt. Dieser Vorteil wird, verglichen mit dem bekannten Bremsgerät, ohne Einschränkung hinsichtlich der Forderung nach möglichst kurzer axialer Baulänge erzielt, wobei das erfindungsgemäße Bremsgerät in konstruktiver Hinsicht eher mit geringerem technischem Aufwand behaftet ist als das bekannte Bremsgerät.

Mittels eines gemäß Anspruch 2 vorgesehen und angeordneten zweiten Antriebskolbens ist eine höhere Verstärkerwirkung erzielbar, ggf. auch die Ausnutzung einer auf niedrigerem Ausgangsdruckniveau arbeitenden Hilfsdruckquelle, was unter Gesichtspunkten der Verschleißminderung und Funktionssicherheits des Bremsgeräts vorteilhaft ist.

In Kombination hiermit ist durch die Merkmale des Anspruchs 2 eine baulich besonders vorteilhafte Anordnung des Bremsventils innerhalb dieses weiteren Antriebskolbens angegeben, wobei ein druckstangenförmiges Steuerglied des Bremsventils, das an dem Antriebskolben abstützbar ist, zur Einleitung der Betätigungskraft ausnutzbar ist, die bei einem Ausfall des Bremskraftverstärkers allein noch zur Bremsenbetätigung verfügbar ist.

Je nach Auslegung der Verstärkerkolben und der die Ausgangsdruckräume begrenzenden Hauptzylinderkolben des Bremsgeräts entweder nur bei ausgefallenenem Bremskraftverstärker, ggf. auch im fehlfunktionsfreien Fall auftretende, insbesondere an dem jochförmigen Axialkraft-Übertragungselement angreifende Querkräfte, das zumindest bei einem Verstärkerausfall asymmetrischen Reaktionskräften ausgesetzt ist, können mittels einer gemäß Anspruch 4 gestalteten axialen Führungs-Einrichtung auf einfache Weise hinreichend sicher aufgefangen werden.

Durch die gemäß Anspruch 5 vorgesehene Gestaltung des Bremsgerätgehäuses ist eine zuverlässige Medientrennung zwischen den Bremsflüssigkeit enthaltenden Ausgangsdruckräumen des Bremsgeräts und den dem Verstärkerteil zugeordneten Druckräumen des Bremsgeräts erzielt, ohne daß die Gefahr besteht, daß Schleppmengen von Hydrauliköl, mit dem der Bremskraftverstärker betrieben wird, und seien es auch nur geringe Schleppmengen, mit den Dichtungen in Berührung kommen können, mittels derer die Ausgangsdruckräume des Bremsgeräts gegen den gemäß Anspruch 5 vorgesehenen Leckölraum abgedichtet sind. Bei dem erfindungsgemäßen Bremsgerät können daher die üblichen, gegen jeweils nur ein Hydraulik-Medium — Bremsflüssigkeit oder Hydrauliköl — resistente Dichtungen eingesetzt werden, die wesentlich billiger sind als gegen beide Medien resistente Dichtungen.

Gleichmäßigen — guten oder schlechten — Entlüftungsgrad der beiden Bremskreise sowie fehlerfreie Funktion des Bremskraftverstärkers vorausgesetzt, wird bei Beachtung der durch die Merkmale des Anspruchs 6 angegebenen Dimensionierungsrelation für die wirksamen Querschnittsflächen der Primärkolben und der mit diesen jeweils koaxial angeordneten Antriebskolben des Bremsgeräts ein vollkommener Ausgleich der an dem jochförmigen Axialkraft-Übertragungselement angreifenden Antriebs- und Reaktionskräfte erzielt, derart, daß

EP 0 348 648 B1

auf dieses keinerlei Querkräfte wirken.

Dies gilt für die gemäß Anspruch 7 vorgesehene — symmetrische — Gestaltung des Bremsgeräts auch dann, wenn der Bremskraftverstärker ausgefallen sein sollte.

In der durch die Merkmale des Anspruchs 8 vorgesehenen Gestaltung des Bremsgeräts wird auch bei asymmetrischer Anordnung der die Ausgangsdruckräume des Bremsgeräts begrenzenden Kolben eine deutliche Reduzierung der bei einen Verstärkerausfall auf das jochförmige Axialkraft-Übertragungselement wirksamen Querkräfte erzielt.

Sowohl in Kombination mit dieser als auch in Kombination mit einer symmetrischen Gestaltung des Bremsgeräts ist es möglich und vorteilhaft, einen gemäß Anspruch 9 angeordneten, dritten Antriebskolben vorzusehen, der wiederum zur Erhöhung der Verstärkerwirkung ausnutzbar ist oder zur Erniedrigung des Ausgangs-Druckniveaus der Hilfsdruckquelle des Bremskraftverstärkers.

Durch die Merkmale der Ansprüche 10 und 11 sind alternative Gestaltungen des jochförmigen Axialkraft-Übertragungselements und Möglichkeiten seiner Abstützung an je einem der beiden Primärkolbenelemente angegeben, die den beidseits beweglich begrenzenden Teilraum des Primär-Ausgangsdruckraumes des Bremsgeräts einseitig gemeinsam begrenzen. Durch diese alternativen Gestaltungen des Bremsgeräts wird jeweils erreicht, daß bei einem Ausfall sowohl des Bremskraftverstärkers als auch des Vorderachs-Bremskreises für den allein noch — mit Pedalkraft — betätigbaren Hinterachs-Bremskreis ein sogenannter Drucksprung wirksam wird, durch den es — bei hinnehmbarer Verlängerung des Pedalweges — möglich wird, im Hinterachs-Bremskreis im Vergleich mit einem Bremsgerät ohne eine derartige Einrichtung einen relativ höheren Bremsdruck aufzubauen.

Durch die Merkmale der Ansprüche 12 und 13 sind für je eine dieser beiden alternativen Gestaltungen des Bremsgeräts Dimensionierungen des tauchkolbenförmigen Primärkolbenelements bzw. des Ringkolben-förmigen Primärkolbenelements angegeben, durch die — bei einem Ausfall des Bremskraftverstärkers — im Teilbremsbereich eine unterschiedliche Druckentwicklung im Vorderachs-Bremskreis und im Hinterachs-Bremskreis vermieden wird und erst dann eine unterschiedliche Druckentwicklung im Vorderachs-Bremskreis und im Hinterachs-Bremskreis eintreten kann, wenn das von dem jochförmigen Übertragungselement "mitgenommene" Primärkolbenelement auf den Sekundärkolben des Bremsgeräts aufläuft. Die solchermaßen erzielbare weitgehende Vermeidung einer Druckspreizung ist wichtig, um im Notfall eine Überbremsung der Hinterachse, jedenfalls im Teilbremsbereich noch zu vermeiden. Der Vorteil ist Gewährleistung einer guten dynamischen Stabilität des Fahrzeuges im Notbremsfall. Fällt andererseits der Vorderachs-Bremskreis aus, so führt diese Dimensionierung der Primärkolben dazu, daß derjenige Kolben, der in geringerem Abstand von dem Sekundärkolben angeordnet ist, entsprechend "früher" auf den Sekundärkolben aufläuft, was auch den praktischen Bedürfnissen eines möglichst frühzeitigen Einsetzens der Bremswirkung an der Hinterachse zugute kommt. Das erfindungsgemäße Bremsgerät arbeitet in dieser Notsituation wie ein konventioneller Tandem-Hauptzylinder.

Mittels einer gemäß Anspruch 14 vorgesehenen, in für sich bekannter Weise realisierbaren Umschalteinrichtung kann die installierte Bremskraftverteilung auf zwei verschiedene, fest abgestimmte Werte eingestellt werden.

Soweit hierdurch eine Anpassung der Bremskraftverteilung an vorgegebene Beladungszustände des Fahrzeuges im Sinne einer Optimierung der Bremswirkung erzielt werden soll, kann z.B. ein lastabhängig schaltender Wegschalter vorgesehen werden, so daß die bedarfsgerechte Umschaltung selbsttätig erfolgt.

Für den Fall, daß das Fahrzeug mit einem Antiblockiersystem üblicher Bauart und Funktion ausgerüstet ist, sind durch die Merkmale der Ansprüche 15 und 16 für die Umschaltung und deren Durchführung geeignete Kriterien und technische Maßnahmen angegeben.

Durch die Merkmale des Anspruchs 17 ist eine konstruktiv und steuerungstechnisch einfache Gestaltung einer derartigen Umschalteinrichtung angegeben.

Weitere Einzelheiten und Merkmale der Erfindung ergeben sich aus der nachfolgenden Beschreibung spezieller Ausführungsbeispiele anhand der Zeichnung. Es zeigen :

Fig. 1    ein erstes Ausführungsbeispiel eines erfindungsgemäßen Bremsgeräts mit hydraulischem Bremskraftverstärker mit zwei Antriebskolben, die entlang der zentralen Längsachsen von Gehäusebohrungen angreifen, in denen die Ausgangsdruckräume des Bremsgeräts beweglich begrenzende Primär- und Sekundärkolben druckdicht verschiebbar angeordnet sind, im Schnitt längs der die zentralen Achsen der Bohrungen enthaltenden Längsmittelebene des Bremsgeräts,

Fig. 2    Einzelheiten einer alternativen Gestaltung der Primärkolbenelemente, die in der auch den Sekundärkolben des Bremsgeräts enthaltenden Gehäusebohrung verschiebbar angeordnet sind,

Fig. 3    ein weiteres Ausführungsbeispiel eines erfindungsgemäßen Bremsgeräts mit bezüglich seiner zentralen Längsachse symmetrischer Anordnung der die Ausgangsdruckräume des Bremsgeräts

**4**

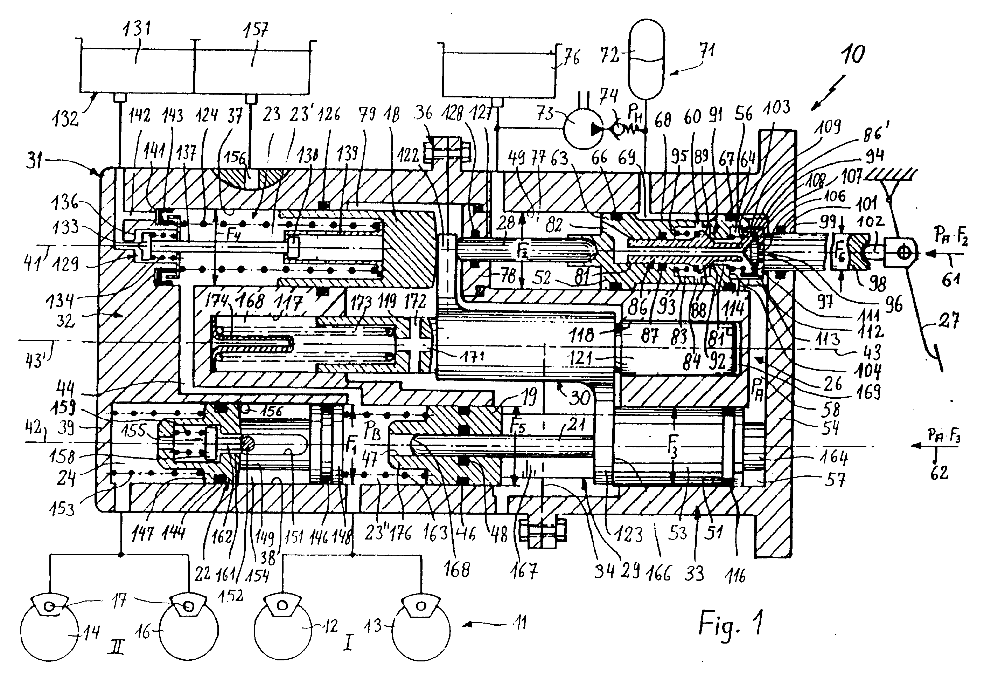

begrenzenden Primär- und Sekundärkolben und ebenfalls symmetrischer Anordnung der Antriebskolben des Bremskraftverstärkers, in einer der Fig. 1 entsprechenden Darstellung,

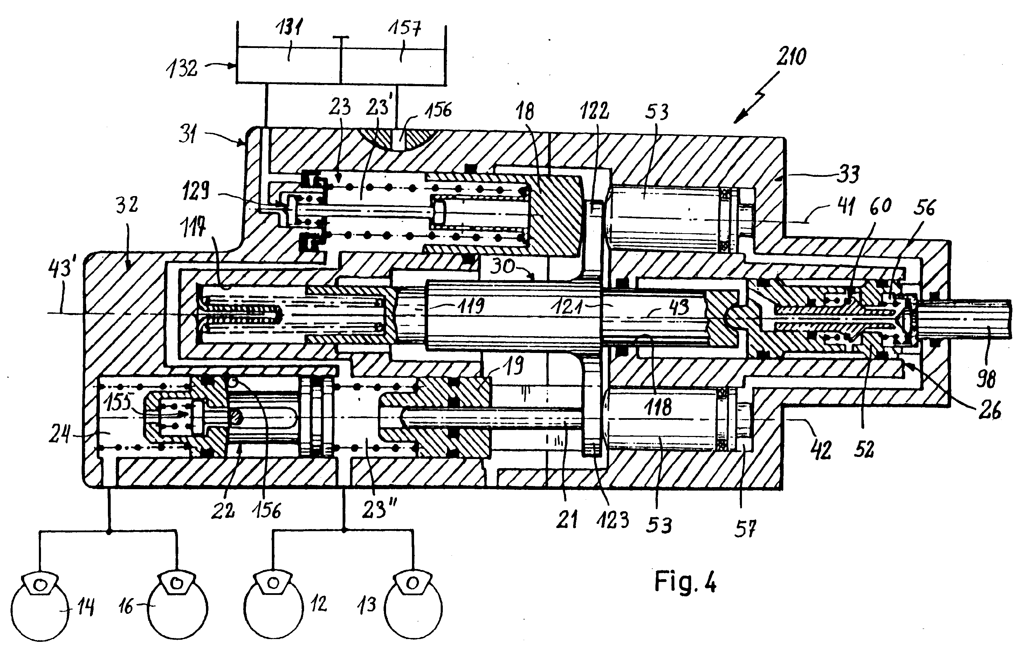

Fig. 4 ein weiteres Ausführungsbeispiel eines erfindungsgemäßen Bremsgeräts mit asymmetrischer Anordnung der die Ausgangsdruckräume begrenzenden Primär- und Sekundärkolbenelemente, jedoch symmetrischer Ausbildung des Bremskraftverstärkers, in einer der Fig. 1 entsprechenden Darstellung,

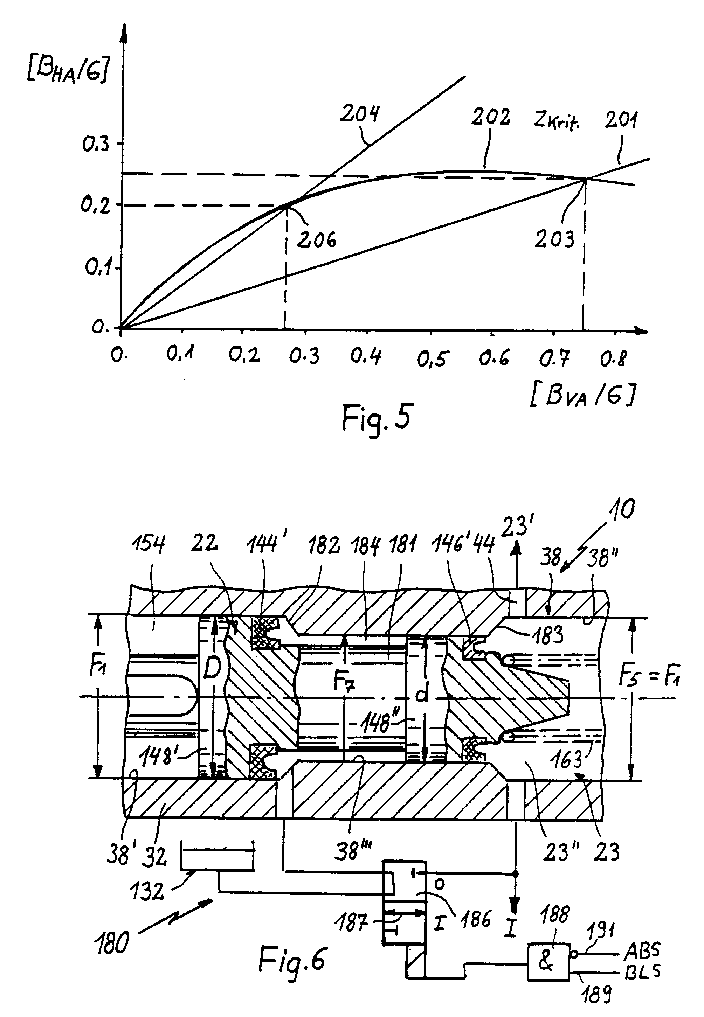

Fig. 5 ein Bremskraftdiagramm zur Erläuterung einer Umschalteinrichtung, mit der die installierte Bremskraftverteilung auf zwei verschiedene, jeweils fest abgestimmte Werte einstellbar ist und

Fig. 6 Einzelheiten der Umschalteinrichtung und ihrer Steuereinheit, in abgebrochener Schnittdarstellung längs der zentralen Achse der den Sekundärkolben enthaltenden Gehäusebohrung.

Das in der Fig. 1, auf deren Einzelheiten ausdrücklich verwiesen sei, dargestellte, erfindungsgemäße, insgesamt mit 10 bezeichnete Bremsgerät ist für ein Straßenfahrzeug mit einer hydraulischen Zweikreis-Bremsanlage 11 gedacht, bei der die Vorderradbremsen 12 und 13 zu einem ersten statischen Bremskreis I und die Hinterradbremsen 14 und 16 zu einem zweiten statischen Bremskreis II zusammengefaßt sind.

"Statische Bremskreise" soll hierbei bedeuten, daß der Bremsdruck-Aufbau und -Abbau in den lediglich schematisch angedeuteten Radbremszylindern 17 der Radbremsen 12 und 13 bzw. 14 und 16 des Vorderachs-Bremskreises I und des Hinterachs-Bremskreises II durch Kraft-gesteuerte Verschiebung von Kolben 18, 19, 21 und 22 erfolgt, welche axial-bewegliche Begrenzungen von Ausgangsdruckräumen 23 und 24 des Bremsgeräts 10 bilden, an welche je einer der beiden Bremskreise I bzw. II angeschlossen ist.

In das Bremsgerät 10 ist mit dem aus der Fig. 1 ersichtlichen, prinzipiellen Aufbau ein insgesamt mit 26 bezeichneter, hydraulischer Bremskraftverstärker integriert, der eine zu der Kraft $K_P$, mit welcher der Fahrer ein als Stellglied des Bremsgeräts 10 vorgesehenes Bremspedal 27 betätigt, proportionale, höhere Betätigungskraft erzeugt, welche über Axialkraft-Übertragungselemente 28, 29 und 30 auf diejenigen Kolben 18, 19 und 21 Kraft-formschlüssig übertragen wird, welche die einseitigen, jeweils druckdichtbeweglichen Begrenzungen des einen, dem Vorderachs-Bremskreis I zugeordneten Ausgangsdruckraumes 23 bilden, der nachfolgend auch als Primär-Ausgangsdruckraum bezeichnet werden wird.

Durch den Bremsdruck-Aufbau im Primär-Ausgangsdruckraum 23 wirkt auch auf den den anderen Ausgangsdruckraum 24, der nachfolgend auch als Sekundär-Ausgangsdruckraum bezeichnet werden wird, einseitig axialbeweglich begrenzenden, nachfolgend auch als Sekundärkolben bezeichneten Kolben 22 eine dem Produkt $F_1 \cdot P_B$ seiner wirksamen Querschnittsfläche $F_1$ mit dem im Primär-Ausgangsdruckraum 23 erzeugten Bremsdruck $P_B$ entsprechende Kraft, durch die der Sekundärkolben 22 seinerseits — mittelbar — eine Verschiebung im Sinne einer Verringerung des Volumens des Sekundär-Ausgangsdruckraumes 24 erfährt und dadurch im Hinterachs-Bremskreis II Bremsdruck aufgebaut wird.

Das insgesamt mit 31 bezeichnete Gehäuse des Bremsgeräts 10 ist zweiteilig ausgebildet. Es umfaßt ein blockförmiges Hauptzylinderteil 32 und ein ebenfalls blockförmiges Verstärkerteil 33, die entlang der gestrichelt eingezeichneten Gehäusefuge 34 aneinander anliegend mittels üblicher Schrauben-Verbindungen 36 in der dargestellten Anordnung zueinander fest miteinander verbindbar sind.

In das Hauptzylinderteil sind zwei zur Gehäusefuge 34 hin offene Bohrungen 37 und 38 eingebracht, die an ihrer pedalfernen Seite durch einen Endstirnwandbereich 39 des Haupt zylinderteils 32 abgeschlossen sind. Die zentralen Achsen 41 und 42 dieser beiden Bohrungen 37 und 38 verlaufen parallel zueinander und sind, wie der Zeichnung entnehmbar in vertikalem Abstand von der senkrecht zur Zeichenebene verlaufenden Längsmittelebene 43 des Bremsgerätgehäuses 31 angeordnet. Innerhalb dieser beiden Bohrungen 37 und 38 sind die die axial beweglichen Begrenzungen des Primär-Ausgangsdruckraumes 23 bzw. des Sekundär-Ausgangsdruckraumes 24 bildenden Kolben 18, 19 und 21 bzw. 22 in axialer Richtung druckdicht verschiebbar geführt. Der Primär-Ausgangsdruckraum umfaßt zwei durch je eine der beiden Gehäusebohrungen 37 bzw. 38 in radialer Richtung gehäusefest begrenzte Teilräume 23′ und 23″ ; die durch einen Gehäusekanal in ständig kommunizierender Verbindung miteinander stehen.

Der eine, gemäß Fig. 1 obere, axial beweglich durch den Kolben 18 begrenzte Teilraum 23′ ist axial gehäusefest durch den Endstirnwandbereich 39 des Hauptzylinderteils 32 des Gehäuses 31 begrenzt. Der andere Teilraum 23″ des Primär-Ausgangsdruckraumes 23 ist, in axialer Richtung gesehen, beidseits beweglich begrenzt, an seiner pedalfernen Seite durch den Sekundärkolben 22, der auch die axial-bewegliche Begrenzung des Sekundär-Ausgangsdruckraumes 24 bildet, welcher axial gehäusefest durch den Endstirnwandbereich 39 des Hauptzylinderteils 32 begrenzt ist, zum anderen durch die beiden Kolbenelemente 19 und 21, deren eines — das Kolbenelement 19 — als Ringkolben ausgebildet ist, der mit einer kolbenfesten Ringdichtung 46 gegen die Gehäusebohrung 38 abgedichtet ist und deren zweites — das Kolbenelement 21 — als langgestreckt-stößelförmiger Tauchkolben ausgebildet ist, der in einer zentralen Bohrung 47 des Tauchkolbens 19 druckdicht verschiebbar angeordnet und gegen diese mittels einer Ringdichtung 48 abgedichtet ist, die in einer Innennut des Ringkolbens 19 sitzt.

Das ebenfalls blockförmige Verstärkerteil 33 des Gehäuses 31 umfaßt ebenfalls zwei Bohrungen 49 und 51, in denen je ein Antriebskolben 52 bzw. 53 des Bremskraftverstärkers 26 druckdicht verschiebbar geführt ist. Im dargestellten, zusammengebauten Zustand des Gehäuses 31 sind diese Bohrungen 49 und 51 fluchtend mit den Bohrungen 37 bzw. 38 des Hauptzylinderteils 32 des Verstärkergehäuses 31 angeordnet, so daß ihre zentralen Längsachsen mit den zentralen Längsachsen 41 und 42 der Bohrungen 37 und 38 des Hauptzylinderteils 32 zusammenfallen. Die beiden Bohrungen 49 und 51 des Verstärkerteils 33 des Gehäuses 31 sind durch dessen pedalseitige Endstirnwand 54 gehäusefest abgeschlossen. Diese Endstirnwand 54 bildet gleichzeitig die gehäusefest axiale Abgrenzung zweier Antriebsdruckräume 56 und 57, die durch die Antriebskolben 52 bzw. 53 axial beweglich begrenzt sind.

Diese Antriebsdruckräume 56 und 57 sind durch einen Querkanal des Verstärker-Gehäuseteils 33 kommunizierend miteinander verbunden.

Durch die Druckbeaufschlagung dieser beiden Antriebsdruckräume 56 und 57 mit dem Ausgangsdruck eines insgesamt mit 60 bezeichneten Bremsventils, das einen zu der Kraft $K_P$, mit welcher der Fahrer das Bremspedal 27 betätigt, proportionalen Ausgangsdruck $P_A$ abgibt, wirken auf die Antriebskolben 52 und 53 axiale Kräfte, die den Produkten $P_A \cdot F_2$ und $P_A \cdot F_3$ des Ausgangsdruckes $P_A$ des Bremsventils 60 mit der Kolbenfläche $F_2$ bzw. $F_3$ des jeweiligen Antriebskolbens 52 bzw. 53 entsprechen. Durch diese Kräfte, die — axial — in Richtung der Pfeile 61 bzw. 62 wirken und über die Axialkraft-Übertragungselemente 28, 29 und 30 auf die den Primär-Ausgangsdruckraum 23 einseitig beweglich begrenzenden Primärkolben 18, 19 und 21 übertragen werden, erfahren diese unmittelbar und mittelbar auch der Sekundärkolben 22 eine Verschiebung im Sinne einer Volum-Verringerung des Primär-Ausgangsdruckraumes 23 und des Sekundär-Ausgangsdruckraumes 24 des Bremsgeräts 10 und es wird Bremsdruck in diesen Ausgangsdruckräumen 23 und 24 und den an diese angeschlossenen Radbremsen 12 und 13 sowie 14 und 16 aufgebaut.

Die Antriebskolben 52 und 53 des Bremskraftverstärkers 26 und die den Primär-Ausgangsdruckraum 23 bzw. dessen Teilräume 23′ und 23″ beweglich begrenzenden Primärkolben 18 bzw. 19 und 21 sind so dimensioniert, daß das Verhältnis $F_2/F_3$ gleich dem Verhältnis $F_4/F_5$ ist, wobei mit $F_2$ die wirksame Querschnittsfläche des einen Antriebskolbens 52 bezeichnet ist, mit $F_4$ die wirksame Querschnittsfläche desjenigen Primärkolbens 18, der mit dem vorgenannten Antriebskolben 52 entlang der gemeinsamen zentralen Längsachse 41 der Bohrungen 37 und 49 angeordnet ist, weiter mit $F_3$ die wirksame Querschnittsfläche des anderen Antriebskolbens 53 des Bremskraftverstärkers 26, sowie mit $F_5$ die Gesamtquerschnittsfläche der beiden Primärkolbenelemente 19 und 21 bezeichnet ist, die koaxial bezüglich der zentralen Längsachsen 42 angeordnet sind, welche die — gemeinsame — zentrale Längsachse der Gehäusebohrungen 38 und 51 des Hauptzylinderteils 32 bzw. des Verstärkerteils 33 des Gehäuses 31 des Bremsgeräts 10 ist.

Das Bremsventil 60 des Bremskraftverstärkers 26 ist beim dargestellten, speziellen Ausführungsbeispiel in denjenigen Antriebskolben 52 integriert, der, entlang der gemeinsamen zentralen Längsachse 41 der beiden Bohrungen 37 und 49 des Hauptzylinderteils 32 bzw. des Verstärkerteils 33 des Gehäuses 31 gesehen, über das Axialkraft-Übertragungselement 28 zentral an demjenigen Primärkolben 18 abgestützt ist, welcher den axial gehäusefest begrenzten Teilraum 23′ des Primär-Ausgangsdruckraumes 23 druckdicht beweglich begrenzt.

In der dargestellten, speziellen Gestaltung des Antriebskolbens 52 und des in diesen integrierten Bremsventils 60 hat der Antriebskolben 52 zwei in axialem Abstand voneinander angeordnete Kolbenflansche 63 und 64, die mittels je einer kolbenfesten Ringdichtung 66 bzw. 67 gegen die Gehäusebohrung 49 abgedichtet sind. Zwischen diesen Kolbenflanschen 63 und 64 hat der Antriebskolben 52 eine flache Außennut 68, welche die radial innere Begrenzung eines ringspaltförmigen Eingangsdruckraumes 69 des Bremsventils 60 bildet, in welchen permanent der — hohe — Ausgangsdruck $P_H$ einer insgesamt mit 71 bezeichneten Hilfsdruckquelle des Bremskraftverstärkers 26 eingekoppelt ist, die in hierfür üblicher Gestaltung einen permanent an den Eingangsdruckraum 69 angeschlossenen Druckspeicher 72 umfaßt, der mittels einer Ladepumpe 73 über ein als Rückschlagventil dargestelltes Speicher-Ladeventil 74 mit Druckmedium aus dem — drucklosen — Vorratsbehälter 76 der Hilfsdruckquelle 71 aufladbar ist. Durch den pedalfernen Flansch 63 des Antriebskolbens 52 ist der Eingangsdruckraum 69 gegen einen Ausgleichsraum 77 abgegrenzt, welcher permanent an den Vorratsbehälter 76 der Hilfsdruckquelle 71 angeschlossen ist. Dieser Ausgleichsraum 77 ist gehäusefest durch einen in die Gehäusebohrung 49 eingesetzten Stopfen 78 in axialer Richtung abgeschlossen und gegen einen Lecköhlraum 79 abgegrenzt, der sich zwischen den blockförmigen Bereichen des Hauptzylinderteils 32 und des Verstärkerteils 33 des Bremsgerätgehäuses 31 erstreckt und "drucklos" gehalten ist, d.h. lediglich unter Atmosphärendruck stehend, wie der Druckmittel-Vorratsbehälter 76 der Hilfsdruckquelle 71.

Der Antriebskolben 52 hat eine zentrale, axiale Bohrung 81, die in den Antriebsdruckraum 56 mündet, sich über den größten Teil der Länge des Antriebskolbens 52 erstreckt, und im Bereich seines den Eingangsdruckraum 69 gegen den Ausgleichsraum 77 abgrenzenden Kolbenflansches 63 über einen Ausgleichskanal 82 mit dem Ausgleichsraum 77 kommunizierend verbunden ist.

Auf einem mittleren Abschnitt ihrer Länge hat die zentrale Bohrung 81 eine ringnutförmige, radiale Erweiterung 83, die über radiale Bohrungen 84 des Antriebskolbens 52 mit dem den Eingangsdruckraum 69 des Bremsventils 60 bildenden, ringspaltförmigen Raum in ständigkommunizierender Verbindung steht.

Der insgesamt mit 86 bezeichnete Ventilkörper des Bremsventils ist als im wesentlichen röhrchenförmiger Stößel ausgebildet, der innerhalb der zentralen Bohrung 81 des Antriebskolbens 52 axial verschiebbar geführt und mittels einer kolbenfesten Ringdichtung 87, welche innerhalb des an der pedalfernen Seite an die radiale Erweiterung 83 anschließenden Abschnittes der zentralen Bohrung 81 des Antriebskolbens 52 gegen diese abgedichtet ist.

Innerhalb der ringnutförmigen, radialen Erweiterung 83 der zentralen Kolbenbohrung 81 hat der Ventilkörper 86 eine radiale Rippe mit sich pedalseitig konisch verjüngender Mantelfläche 89, welche die Ventilkörperseitige Dichtfläche eines ersten Kegel-Sitzventils 91 bildet, dessen Sitz 92 durch den kreisringförmigen, inneren Mündungsrand desjenigen Abschnittes 81' der Kolbenbohrung 81 gebildet ist, der sich zwischen der radialen Erweiterung 83 der Kolbenbohrung 81 und dem Antriebsdruckraum 56 des Antriebskolbens 52 erstreckt.

Der Außendurchmesser des pedalseitig an die konische radiale Dichtrippe 88 des Ventilkörpers 86 anschließenden, pedalseitigen Abschnittes 86' ist etwas geringer als der Durchmesser des pedalseitigen Bohrungsabschnittes 81' und beträgt in typischer Gestaltung etwa 4/5 desselben. Durch eine vorgespannte Ventilfeder 93, die sich beim dargestellten, speziellen Ausführungsbeispiel an der pedalfernen radialen Flanke 95 der ringnutförmigen Erweiterung 83 der Kolbenbohrung 81, einerseits, und andererseits an der dieser zugewandten Flanke der radialen Rippe 88 des Ventilkörpers 86 abstützt, wird dieser in die der Sperrstellung des ersten Sitzventils 91 des Bremsventils 60 entsprechende Stellung gedrängt, in welcher der pedalseitige, röhrchenförmige Abschnitt 86' mit einem freien Abschnitt, dessen Länge mindestens dem maximalen axialen Hub des Ventilkörpers 86 entspricht und etwa gleich diesem Hub ist, in den Antriebsdruckraum 56 hineinragt. Der innerhalb des Antriebsdruckraumes 56 angeordnete freie Mündungsrand 94 des Endabschnittes 86' des Ventilkörpers 86 bildet den Sitz eines zweiten, insgesamt mit 96 bezeichneten Kegel-Sitzventils, dessen kegelstumpfförmiger Ventilkörper 97 am inneren Ende einer kolbenförmigen Druckstange 98 angeordnet ist, die in einer mit der zentralen Längsachse 41 des Antriebskolbens 56 koaxialen Bohrung 99 der pedalseitigen Endstirnwand 54 des Verstärkerteils 33 des Bremsgerätgehäuses 31 druckdicht verschiebbar geführt ist, wobei zur Abdichtung dieser Druckstange 98 gegen die Gehäusebohrung 99 eine gehäusefeste Ringdichtung 101 vorgesehen ist. An dieser Druckstange 98 greift über den mit dem Bremspedal 27 gelenkig verbundenen Pedalstößel 102 — im wesentlichen axial — die Betätigungskraft an, die gleich dem Produkt $K_P \cdot$ ü aus der Pedalübersetzung ü mit der Kraft $K_P$ ist, mit der der Fahrer das Bremspedal 27 "niederdrückt".

Dieses zweite Kegelsitzventil 96 wird durch eine zweite vorgespannte Ventilfeder 103 in seine Offen-Stellung gedrängt, in welcher die Antriebsdruckräume 56 und 57 des Bremskraftverstärkers 26 mit dessen Ausgleichsraum 77 kommunizierend verbunden, d.h. druckentlastet sind.

Der pedalseitige Kolbenflansch 64 des Antriebskolbens 52 hat einen kurzen, hülsenförmigen Fortsatz 104, mit dem er sich, in der dargestellten, dem nicht-betätigten Zustand des Bremsgeräts 10 entsprechenden Grundstellung an der Endstirnwand 54 des Verstärkerteils 33 des Gehäuses 31 abstützt.

In einer zwischen dem kegelförmigen Ventilkörper 97 und dem inneren Ende der kolbenförmigen Druckstange 98 angeordneten Ringnut 106 ist mit einem radial nach innen weisenden Bodenflansch 107 eine in der Längsschnittdarstellung der Fig. 1 U-förmig gestaltete Anschlag-Hülse 108 verankert, die mit ihrem Mantel 109 an der inneren Mantelfläche des hülsenförmigen Fortsatzes 104 des Antriebskolbens 52 gleitend verschiebbar geführt ist.

An der dem Antriebskolben zugewandten Innenseite des radial nach innen weisenden Flansches 107 der Anschlaghülse 108 ist die Ventilfeder 103 ventilkörperseitig abgestützt. Der hülsenförmige Fortsatz 104 des Antriebskolbens 52 ist seinerseits an seinem freien Ende mit einem radial nach innen weisenden Anschlagflansch 111 versehen, der den äußeren Rand des ebenfalls radial nach innen weisenden Hülsenflansches 107 hintergreift, wo durch die Druckstange 98 an den Antriebskolben 52 gefesselt ist. In den Mantel 109 der Anschlaghülse 108 sind außenseitig axiale Rillen 112 eingearbeitet, und es ist weiter der hülsenförmige Fortsatz 104 des Antriebskolbens 52 mit radialen Öffnungen 113 versehen, so daß Arbeitsmedium des Bremskraftverstärkers 26 aus dem Raum zwischen den Antriebskolben 52 und der Anschlaghülse 108 der Druckstange 98 in den diese umgebenden Bohrungsraum übertreten und über den Querkanal 58 auch zum Antriebsdruckraum 57 des anderen Antriebskolbens 51 überströmen kann.

Der maximale Hub, den die Druckstange 98 relativ zum Antriebskolben 52 ausführen kann, ist durch die Abstützung der Mantel-Endstirnfläche der Anschlaghülse an der pedalseitigen Anschlag-Ringfläche 114 des Antriebskolbens 52 begrenzt.

Der den anderen Antriebsdruckraum 57 des Bremskraftverstärkers 26 beweglich begrenzende Antriebskolben 53 ist als ein die mit der zentralen Längsachse 42 koaxiale Gehäusebohrung 51 des Verstärkerteils 53 vollständig "ausfüllender" kreiszylindrischer Kolben ausgebildet, der mittels nur einer — kolbenfesten — Gleitdichtung 116, die an seinem dem Antriebsdruckraum 57 zugewandten Endabschnitt angeordnet ist, gegen diese Gehäusbohrung 51 abgedichtet.

Entlang einer in der Längsmittelebene 43 des Gehäuses 31 verlaufenden, zentralen Längsachse 43' des Gehäuses 31 sind dessen Gehäuseteile 32 und 33 mit miteinander fluchtenden, als Sackbohrungen ausgebildeten Führungsbohrungen 117 bzw. 118 versehen, die zu dem Leckölraum 79 hin offen sind.

In diesen Sackbohrungen 117 und 118 ist mit je einem Führungsfortsatz 119 bzw. 121 das Joch-förmige Axialkraft-Übertragungselement 30 axial hin- und herverschiebbar geführt, das mit zwei radial abstehenden Stützarmen 122 und 123 versehen ist, an deren einem — dem gemäß Figur 1 oberen-Stützarm 122, der das Bremsventil 60 enthaltende Antriebskolben 52 über das als schlanker Stößel dargestellte Axialkraft-Übertragungselement 28 axial abgestützt ist, und an deren anderem, dem radialen Stützarm 123, der andere, gemäß Fig. 1 untere Antriebskolben 53 des Bremskraftverstärkers 26 axial abstützbar ist.

An dem oberen radialen Stützarm 122 des Joches 30 ist axial der den einen Teilraum 23' des Primär-Ausgangsdruckraumes 23 beweglich begrenzende Kolben 18 abgestützt, der durch eine vorgespannte Rückstellfeder 124 in Anlage mit dem oberen Stützraum 122 gehalten wird. Der den Teilraum 23' des Primär-Ausgangsdruckraumes 23 begrenzende Kolben ist mittels einer gehäusefesten Ringdichtung 126 gegen die diesen Teilraum 23' radial begrenzende Gehäusebohrung 37 abgedichtet. Der sich zwischen dem oberen Stützarm 122 und dem Antriebskolben 52 erstreckende Stößel 28 ist in einer zentralen Bohrung 127 des den Ausgleichsraum 77 des Bremskraftverstärkers 26 gegen den Leckölraum 79 des Gehäuses 31 abgrenzenden Stopfen 78 verschiebbar geführt und mittels der stopfenfesten Ringdichtung 128 gegen diese Bohrung 127 abgedichtet.

Der obere, durch den — im wesentlichen einstückigen — Primärkolben 18 axial beweglich und durch den Endstirnwandbereich 39 des Hauptzylinder-Gehäuseteils 32 gehäusefest begrenzte Teilraum 23' des Primär-Ausgangsdruckraumes 23 ist mit einem insgesamt mit 129 bezeichneten Zentralventil versehen, das in der dem nicht-betätigten Zustand des Bremsgeräts 10 entsprechenden, dargestellten Grundstellung des Primärkolbens 18 und der weiteren, durch eine Pedalbetätigung verschiebbaren Elemente des Bremsgeräts 10 seine Offen-Stellung einnimmt, in welcher eine dem Primär-Ausgangsdruckraum 23 des Bremsgeräts 10 zugeordnete Kammer 131 des Bremsflüssigkeits-Vorratsbehälters 132 mit dem Primär-Ausgangsdruckraum 23 kommunizierend verbunden ist und somit ein Druckausgleich zwischen dem Primär-Ausgangsdruckraum 23 und der Kammer 131 des Bremsflüssigkeits-Vorratsbehälters 132 erfolgen kann. Dieses Zentralventil 129, das auf vielfältige, bekannte Weise realisiert sein kann, hat die Eigenschaft, daß es nach einem kleinen Anfangsabschnitt eines Bremsdruck-Aufbauhubes des Primärkolbens 18 in seine Sperrstellung gelangt, wonach Druck in dem Primär-Ausgangsdruckraum 23 aufbaubar ist.

Beim dargestellten, speziellen Ausführungsbeispiel ist dieses Zentralventil 129 als ein Teller-Sitz-Ventil ausgebildet, dessen Ventilkörper 133 durch eine vorgespannte Ventilfeder 134 gegen den zentral in den Teilraum 23' des Primär-Ausgangsdruckraumes 23 mündenden, kreisringförmigen Ventilsitz 136 gedrängt wird und mittels eines am kolbenseitigen Ende eines langgestreckt-stabförmigen Fortsatzes 137 angeordneten Fessel-Flansches 138 und einer kolbenfest-angeordneten Fesselhülse 139 an den Kolben 18 derart gefesselt ist, daß der Ventilkörper 129 erst von seinem Ventilsitz 133 abhebt, wenn sich der Kolben 18 unmittelbar seiner — dargestellten — Grundstellung nähert.

In eine das Zentralventil 129 in der dargestellten Anordnung koaxial umgebende Ringnut 141, an deren Grund mindestens ein Überströmkanal 142 mündet, der mit der Kammer 131 des Bremsflüssigkeits-Vorratsbehälters 132 kommunizierend verbunden ist, ist eine Lippendichtung 143 eingesetzt, welche, solange der Druck im Primär-Ausgangsdruckraum 23 des Bremsgeräts 10 größer ist als in dessen Bremsflüssigkeits-Vorratsbehälter 132 die Mündungsöffnung des Überströmkanals 142 verschlossen hält und ansonsten, z.B. bei einer raschen Rückzugsbewegung des Kolbens 18 im Sinne eines Bremsdruck-Abbaues, ein Nachströmen von Bremsflüssigkeit aus dem Bremsflüssigkeits-Vorratsbehälter 132 in den Primär-Ausgangsdruckraum 23 des Bremsgeräts 10 auch dann ermöglicht, wenn das Zentralventil 129 — noch — geschlossen ist.

Der den Sekundär-Ausgangsdruckraum 24 des Bremsgeräts 10 einseitig beweglich begrenzende Sekundärkolben 22 hat zwei in axialem Abstand voneinander angeordnete, mittels je einer kolbenfesten Ringdichtung 144 bzw. 146 gegen die Gehäusebohrung 38 druckdicht verschiebbar abgedichtete Flansche 147 bzw. 148, die durch eine Kolbenstange 149 miteinander verbunden sind. Diese Kolbenstange 149 hat einen sich zwischen den aneinander zugewandten Seiten der Kolbenflansche 147 und 148 erstreckenden Längsschlitz 151, durch den ein gehäusefest angeordneter Anschlagstift 152 radial hindurchtritt. Durch Anlage des den Sekundär-Ausgangsdruckraum 24 begrenzenden Flansches 147 des Sekundärkolbens 22 an diesem Anschlagstift 152 ist die — dargestellte —, dem nicht-betätigten Zustand des Bremsgeräts entsprechende Grundstellung des Sekundärkolbens 22 markiert. Der Sekundärkolben 22 wird durch eine an der Endstirnwand 39 des Hauptzylinderteils 32 des Bremsgerätgehäuses 31 abgestützte, vorgespannte Rückstellfeder 153 in diese dargestellte Grundstellung gedrängt.

Der in axialer Richtung durch die beiden Kolbenflansche 147 und 148 des Sekundärkolbens 22 begrenzte Ringraum ist über einen Ausgleichskanal 156, von dem lediglich die stets zwischen den beiden Kolbenflanschen 147 und 148 angeordnete Mündungsöffnung sowie seine Anschlußöffnung dargestellt sind, mit einer zweiten, dem Sekundär-Bremskreis II zugeordneten Kammer 157 des Bremsflüssigkeits-Vorratsbehälters 132 verbunden.

Ein insgesamt mit 155 bezeichnetes Zentralventil für sich bekannter Bauart, das funktionell dem Zentralventil 129 des Primär-Bremskreises I entspricht, ist hier in den Sekundärkolben 22 integriert. Es ist als Teller-Sitz-Ventil ausgebildet, dessen Ringflansch-förmiger Ventilkörper 158 durch eine vorgespannte Ventilfeder 159 in seine Sperrstellung gedrängt wird, in welcher er dichtend auf dem Ventilsitz aufliegt, der durch die Ringfläche gebildet ist, welche die sekundär-druckraumseitige Mündungsöffnung eines axialen Ausgleichskanals 161 verschließt, der in der Offen-Stellung des Zentralventils 155 den Sekundär-Ausgangsdruckraum 24 mit dem Ringraum 154 verbindet.

Der Ventilkörper 158 ist mit einen durch den Ausgleichskanal 161 hindurchtretenden, stößelförmigen Anschlagfortsatz versehen, der geringfügig länger ist als die axiale Ausdehnung des Ausgleichskanals 161 und an dem Anschlagstift 152 abstützbar ist. Durch Anlage des Anschlag-Fortsatzes 162 an dem Anschlagstift 152 wird der Ventilkörper 158, in der Grundstellung des Sekundärkolbens 22 sowie in unmittelbarer "Nähe" dieser Grundstellung, in seiner von den Ventilsitz abgehobenen, dargestellten Stellung gehalten, in welcher ein Druckausgleich zwischen dem Sekundär-Ausgangsdruckraum 24 und der zweiten Kammer 157 des Bremsflüssigkeits-Vorratsbehälters 132 erfolgen kann.

Durch eine weitere, vorgespannte Rückstellfeder 163, die sich axial einerseits an dem als Schwimmkolben ausgebildeten Sekundärkolben und andererseits an dem Ringkolben 19 der einerseits diesen und andererseits den Tauchkolben 21 umfassenden Primärkolben-Anordnung abstützt, welche die zweite axiale bewegliche Begrenzung des zum anderen durch den Schwimmkolben 22 axial beweglich begrenzten Teilraumes 23″ des Primär-Ausgangsdruckraumes bildet, wird der Ringkolben 19 in seine dargestellte, dem nicht-betätigten Zustand des Bremsgeräts 10 entsprechende Grundstellung gedrängt, in der auch der kreiszylindrische Antriebskolben 153 seine Grundstellung einnimmt, in welcher er sich mit einem rückwärtigen Stützfortsatz 164 an der pedalseitigen Endstirnwand 54 des Verstärkerteils 33 des Gehäuses 31 des Bremsgeräts 10 abstützt, wobei der Ringkolben 19 mit zwei als Axialkraft-Übertragungselemente 29 wirkenden axialen Stützfortsätzen versehen ist, die beidseits des unteren Stützarmes 123 des Joches 30 an diesem Stützarm 123 vorbeitretend an der dem Leckölraum 79 zugewandten — ebenen — Stirnfläche 166 des Antriebskolbens 23 axial abstützbar sind und mit ihren aufeinander zuweisenden — ebenen — Begrenzungsflächen 167, die in radialem Abstand von dem Tauchkolben 21 verlaufen, Gleit-Führungsflächen für den Stützarm 123 des Joches 30 bilden, das hierdurch in der mit der dargestellten Orientierung seiner Stützarme 122 und 123 geführt wird. Der Tauchkolben 21 ist beim dargestellten, speziellen Ausführungsbeispiel axial-verschiebfest mit dem Joch 30, bzw. dessen unterem Stützarm 123 verbunden, so daß er stets dessen axiale Bewegungen mit ausführt.

Der Tauchkolben 21 ist etwas "kürzer" als der Ringkolben 19, kürzer in dem Sinne, daß, in der dargestellten Grundstellung gesehen, der axiale Abstand seines freien Endes 168 von der den Teilraum 23″ des Primär-Ausgangsdruckraumes 23 begrenzenden Fläche des Kolbenflansches 146 des Sekundärkolbens 22 etwas größer ist als der entsprechend gemessene Abstand des Ringkolbens 19 von dem Sekundärkolben 22, jedoch kleiner als der maximale Hub, um den der Tauchkolben 21 relativ zu dem Schwimmkolben 22 verschiebbar ist.

Die durch die Führungsbohrungen 117 und 118 der Gehäuseteile 32 und 33 gehäusefest und durch die Führungsfortsätze 119 und 121 des Joches 30 axial beweglich begrenzten Gehäuse-Hohlräume 168 und 169 sind zweckmäßigerweise durch eine durchgehende Längsbohrung 171 und eine diese "kreuzende" Querbohrung 172 in kommunizierender Verbindung mit dem Leckölraum 79 und dadurch drucklos gehalten.

In dem Gehäuseraum 168, der durch die Sackbohrung 117 des Hauptzylinderteils 32 gehäusefest und durch den in dieser verschiebbaren Führungsfortsatz 119 des Joches 30 axial beweglich begrenzt ist, ist eine das Joch 30 in seine dargestellte Grundstellung drängende vorgespannte Rückstellfeder 173 angeordnet, die sich gehäuseseitig am Grund der Sackbohrung 117 abstützt und jochseitig am Grund einer topfförmigen, axialen Vertiefung des Führungsfortsatzes 119, wobei die axiale Tiefe dieser Vertiefung etwa der Blocklänge der Rückstellfeder 173 entspricht und diese Rückstellfeder 173 gehäuseseitig durch ein schlankes Zentrierröhrchen 174 zentriert ist.

Das insoweit seinem Aufbau nach erläuterte, erfindungsgemäße Bremsgerät 10 arbeitet wie folgt, wobei zunächst der Fall störungsfreier Funktion betrachtet sei :

Bei einer Betätigung des Bremsgeräts 10 wird in die durch die Antriebskolben 52 und 53 einseitig beweglich begrenzten Antriebsdruckräume 56 und 57 ein zu der Pedalkraft $K_P$ proportionaler Antriebsdruck eingekoppelt, der mittels des Bremsventils 60 vom Ausgangsdruck der Hilfsdruckquelle abgeleitet wird. Die Antriebskolben 52 und 53 erfahren hierdurch eine Verschiebung, die mittels der Axialkraft-Übertragungselemente 28, 29 und 30 auf den Primärkolben 18 und die Primärkolbenanordnung 19, 21 übertragen wird, wodurch diese Kolbenelemente 18, 19 und 21 eine Verschiebung im Sinne eines Druckaufbaues in den beiden Teilräumen 23′ und 23″ des Primär-Ausgangsdruckraumes 23 erfahren und mittelbar auch der Sekundärkolben 22 eine Verschiebung im Sinne eines Druckaufbaues im Sekundär-Ausgangsdruckraum 24 erfährt und demgemäß im Bremskreis I und im Bremskreis II Bremsdruck aufgebaut wird. Eine Rückmeldung über den Betrag des in den Radbremsen herrschenden Bremsdruckes wird dadurch erzielt, daß der in den Antriebs-Druckräumen 56 und 57 wirkende Ausgangsdruck des Bremsventils 60 auch auf die Druckstange 98 wirkt, wodurch sich eine der Betätigungskraft entgegenwirkende "Rückmelde-Kraft" ergibt, deren Betrag durch das Produkt aus dem Ausgangsdruck $P_A$ des Bremsventils 60 mit der wirksamen Querschnittsfläche $F_6$ der Druckstange 98 gegeben ist.

Bei einem Ausfall des Hinterachs-Bremskreises II kann im Vorderachs-Bremskreis I weiterhin mit Bremskraftverstärkung gebremst werden, wobei sich dadurch, daß der Bremsdruck-Aufbau im Primär-Ausgangsdruckraum 23 praktisch erst dann eintritt, nachdem der Sekundär-Kolben in Anlage mit der Endstirnwand 39 seiner Bohrung 38 gelangt ist, eine Pedalwegverlängerung ergibt, die jedoch — wegen der geringeren Fläche des Sekundärkolbens in Relation zur Gesamt-Querschnittsfläche der Primärkolben 18, 19 und 21 hinnehmbar gering ist.

Bei einem Ausfall des Vorderachs-Bremskreises bleibt die Bremskraftverstärkung für den Hinterachs-Bremskreis erhalten. Da jedoch im Primär-Ausgangsdruckraum 23 kein Druckaufbau möglich ist und damit die Primärkolben 18 sowie 19 und 21 keiner direkten hydraulischen Rückwirkung ausgesetzt sind, ergibt sich ein Bremsdruck-Aufbau im Hinterachs-Bremskreis II erst dann, wenn der Ringkolben 19, der zusammen mit dem Tauchkolben 21 den Teilraum 23″ des Primär-Ausgangsdruckraumes 23 begrenzt, mit seinem druckraumseitigen Fortsatz 176 auf den Sekundärkolben 22 aufläuft, wobei die für den Druckaufbau im Sekundär-Ausgangsdruckraum 24 und die hydraulische Rückwirkung maßgebliche Wirkfläche nunmehr allein die Querschnittsfläche $F_1$ des Sekundärkolbens 22 ist, die beim dargestellten, speziellen Ausführungsbeispiel, was nicht zwingend ist, gleich der gesamten Wirkfläche $F_5$ des Ringkolbens 19 und des Tauchkolbens 21 ist. Durch die Reduzierung der Wirkflächen der Primärkolben 18 sowie 19 und 21 um die Wirkfläche des den gemäß der Darstellung oberen Teilraum 23′ des Primär-Ausgangsdruckraumes 23 beweglich begrenzenden Primärkolbens 18 ergibt sich, im Vergleich zum störungsfreien Betrieb des Bremsgeräts 10 bei gleicher Betätigungskraft und dieser proportionaler Verstärker-Wirkung ein höherer Ausgangsdruck im Sekundär-Ausgangsdruckraum 24. Durch diesen "Drucksprung" im Sinne einer Erhöhung des Bremsdruckes im Sekundär-Ausgangsdruckraum 24 wird für eine vorgegebene Pedalkraft somit eine entsprechend höhere Fahrzeugverzögerung erreicht.

Bei einem Ausfall des Bremskraftverstärkers 26, z.B. durch Ausfall der Hilfsdruckquelle 71, wird die Betätigungskraft über die Druckstange 98 allein auf den das Bremsventil 60 enthaltenden Antriebskolben 52 übertragen und somit auch auf den Primärkolben 18, der den Teilraum 23′ des Primär-Ausgangsdruckraumes 23 begrenzt, sowie über das Joch 30 auf den Tauchkolben 21 während der andere Antriebskolben 53 und der Ringkolben 19, der einen Teil der den zweiten Teilraum 23″ des Primär-Ausgangsdruckraumes 23 einseitig beweglich begrenzenden Kolbenanordnung 19, 21 bildet, "stehen" bleiben. Die Rückwirkfläche der Primärkolben 18, 19 und 21 ist somit um die wirksame Querschnittsfläche des Ringkolbens 19 reduziert. Dadurch wird — unter Verlängerung des Pedalweges — ein "Übersetzungssprung" wirksam, dahingehend, daß im Vergleich zu einem Verstärker mit konstanten Wirkflächen ohne Umschaltung bei vorgegebener Pedal-Betätigungskraft höhere Bremsdrücke im Primär-Ausgangsdruckraum 23 und im Sekundär-Ausgangsdruckraum 24 erzeugt werden und damit eine relativ höhere Fahrzeugverzögerung erzielt wird.

Fällt sowohl der Bremskraftverstärker 26 als auch der Vorderachs-Bremskreis I aus, so erfolgt ein Druckaufbau im Sekundär-Ausgangsdruckraum 24 sobald der Tauchkolben 21 auf den Sekundär-Kolben 22 aufläuft und damit auf diesen die über die Druckstange 98 und das Joch 30 sowie den Tauchkolben 21 eingeleitete Betätigungskraft wirkt. Auch für diesen Fall ist eine Notbremsung noch möglich.

Dadurch, daß der Tauchkolben 21 "kürzer" ist als der Ringkolben 19 kann sich — bei ansonsten intakten Bremskreisen I und II-eine unterschiedliche Druckentwicklung im Primär-Ausgangsdruckraum 23 und im Sekundär-Ausgangsdruckraum 22, z.B. wegen unterschiedlicher Entlüftungszustände der beiden Bremskreise I und II erst dann ergeben, wenn der Tauchkolben 21 auf den Sekundärkolben 22 aufläuft. Erst ab dieser Kolbenposition kann im Sekundär-Bremskreis II, dem Hinterachs-Bremskreis, falls der Vorderachs-Bremskreis I der schlechter entlüftete ist, durch weitere Kolbenverschiebung ein höherer Bremsdruck aufgebaut werden als im Vorderachs-Bremskreis I. Dies ist von Bedeutung, um im Notfall — dem Ausfall des Bremskraftverstärkers 26 — jedenfalls im Teilbremsbereich eine "Überbremsung" der Hinterachse zu vermeiden und eine gute dynamische Stabilität des Fahrzeuges zu gewährleisten. Andererseits ergibt sich für diese Gestaltung des Ringkolbens 19 und des Tauchkolbens 21, wenn allein der Vorderachs-Bremskreis I ausfällt, die Situation, daß der Ringkolben 19 — bei intakter Bremskraftverstärkung — schon "früher" auf den Sekundärkolben 22 auftrifft, was auch den praktischen Bedürfnissen entspricht, da es in dieser Situation notwendig ist, möglichst "frühzeitig" an der Hinterachse Bremskraft aufbauen zu können.

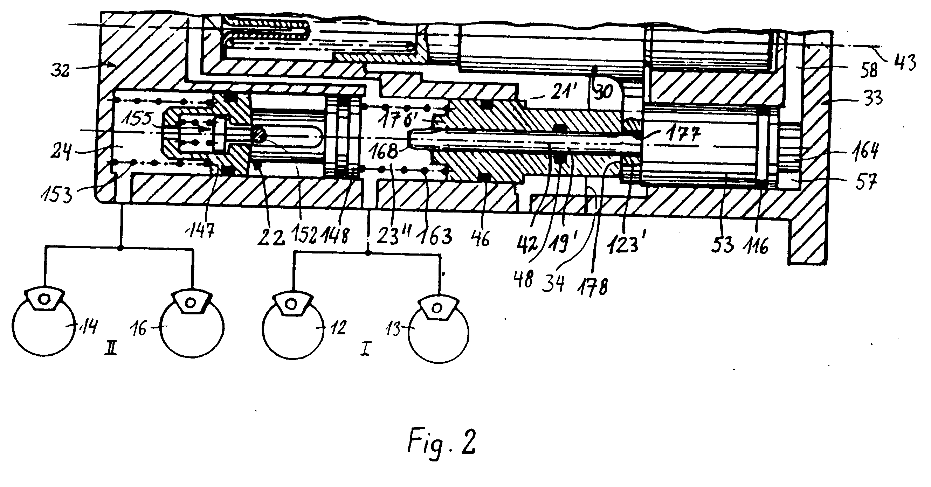

Für die in der Fig. 2, auf deren Einzelheiten nunmehr verwiesen sei, dargestellte Variante des Bremsgeräts 10, die völlig funktionsanalog mit dem Bremsgerät 10 gemäß Fig. 1 ist, sind im wesentlichen nur diejenigen Elemente dargestellt, die sich baulich von funktionsentsprechenden Elementen des Bremsgeräts 10 gemäß Fig. 1 unterscheiden.

Die Elemente des Bremsgeräts 10 gemäß Fig. 2, die mit Elementen des Bremsgeräts 10 gemäß Fig. 1 baugleich sind, sind mit denselben Bezugszeichen belegt wie in der Fig. 1. Soweit dies der Fall ist, wird auf die zu der Fig. 1 gehörenden Beschreibungsteile verwiesen, auch soweit in der Fig. 2 Bezugszeichen angegeben sind, die in der nachfolgenden Beschreibung nicht erwähnt werden.

Soweit Elemente des Bremsgeräts 10 gemäß Fig. 2 zwar nicht baugleich, aber funktionsanalog mit Elementen des Bremsgeräts 10 gemäß Fig. 1 sind, so sind für solche — funktionsanalogen — Elemente dieselben Bezugszeichen verwendet wie für die entsprechenden Elemente der Fig. 1, jedoch mit einem Anführungsstrich versehen.

Es sind dies gemäß Fig. 2 der Ringkolben 21′, der mit dem Tauchkolben 21 gemäß Fig. 1 funktionsanalog ist, der Tauchkolben 19′, der zu dem Ringkolben 19 gemäß Fig. 1 analog ist sowie der gemäß der Zeichnung nach unten weisende Stützarm 123′ des jochförmigen Axialkraftübertragungselementes 30, der hier eine durchgehende, zentrale Führungsbohrung 177 hat, die eine gleitende Verschiebbarkeit des Joches 30 gegenüber dem Tauchkolben 19′ vermittelt.

Der Tauchkolben 19′ kann, wie der Einfachheit halber in der Fig. 2 dargestellt, als ein mit dem Antriebskolben 53 einstückig ausgeführter axialer Fortsatz ausgebildet sein oder aber auf nicht eigens dargestellte Weise an den Antriebskolben 53 gefesselt sein, derart, daß er mit dem Antriebskolben 53 "stehen" bleibt, falls dieser, z.B. bei einem Ausfall der Hilfsdruckquelle 71 in seiner dargestellten, mit dem nichtbetätigten Zustand des Bremsgeräts 10 verknüpften Grundstellung verharrt.

Der Ringkolben 21′ ist hier auf seiner gesamten Länge als bezüglich der zentralen Längsachse 42 rotationssymmetrischer Kolben ausgebildet, der als einfaches Drehteil mit einer zentralen Längsbohrung herstellbar ist.

Er ist mit seiner dem radialen Stützarm 123′ zugewandten, kreisringförmigen Endstirnfläche 178 an diesem abgestützt und wird durch die Rückstellfeder 163 in Anlage mit diesem gehalten.

Sein dem Sekundärkolben 22 zugewandter Stirnfortsatz 176′ ist etwas "kürzer" als der Stützfortsatz 176 des Ringkolbens 19 gemäß Fig. 1. Dafür ist der Tauchkolben 19′ etwas "langer" als der Tauchkolben 21 gemäß Figur 1, derart, daß sein freies, in den unteren Teilraum 23″ des Primär-Ausgangsdruckraumes 23 axial hineinragendes Ende, in der dargestellten Grundstellung gesehen, in geringerem axialem Abstand von dem Kolbenflansch 148 des Sekundärkolbens 22 angeordnet ist als die ringförmige Endstirnfläche des Stirnfortsatzes 176′ des Ringkolbens 21′, mit der dieser seinerseits an dem Sekundärkolben 22 abstützbar ist, falls der Antriebskolben 53 und mit diesem der Tauchkoben 19′ bei einem Ausfall der Hilfsdruckquelle 71 in der dargestellten Grundstellung "stehen" bleiben sollten.

Das Bremsgerät 10 gemäß Fig. 2 ist in funktioneller Hinsicht demjenigen gemäß Fig. 1 völlig analog, so daß auch insoweit auf die zu diesem gegebene Beschreibung verwiesen werden kann.

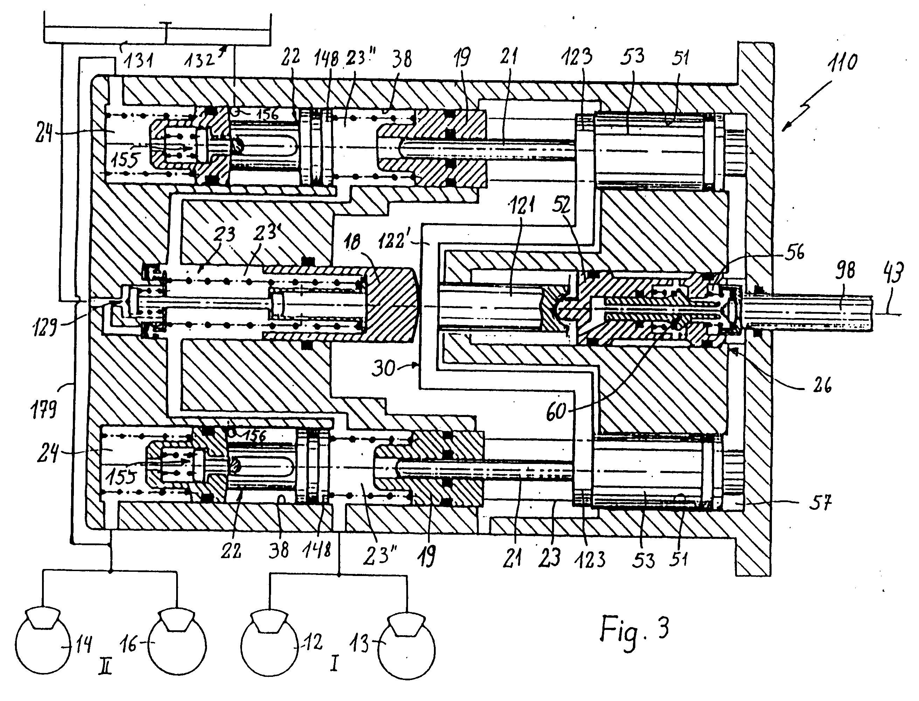

Zur Erläuterung eines weiteren, dem Erfindungsgedanken unterfallenden insgesamt mit 110 bezeichneten Bremsgeräts sei nunmehr auf die diesbezüglichen Einzelheiten der Fig. 3 verwiesen.

Soweit in der Fig. 3 Elemente des Bremsgeräts 110 mit denselben Bezugszeichen belegt sind wie Elemente des Bremsgeräts 10 gemäß Fig. 1, soll dadurch wiederum auf deren prinzipielle Baugleichheit und Funktionsanalogie hingewiesen und auch auf die diesbezüglichen Beschreibungsteile zu Fig. 1 verwiesen sein, auch bezüglich solcher Elemente des Bremsgeräts 110 gemäß Fig. 3, für die lediglich Bezugszeichen angegeben, diese in der nachfolgenden Beschreibung aber nicht eigens erwähnt sind.

Das Bremsgerät 110 gemäß Fig. 3 ergibt sich gleichsam durch "Spiegelung" des Bremsgeräts 10 gemäß Fig. 1 an der senkrecht zur Zeichenebene verlaufenden Ebene, welche die zentrale Längsachse 41 enthält, entlang welcher der nur einseitig beweglich — durch den Primärkolben 18 — begrenzte Teilraum 23′ des Primär-Ausgangsdruckraumes 23 und der das Bremsventil 60 enthaltende Antriebskolben 52 sowie die Druckstange 98 angeordnet sind, Über welche die Pedalkraft $K_P$, sei es als Steuerkraft — bei intaktem Bremskraftverstärker — oder als Betätigungskraft — bei Fehlfunktion des Bremskraftverstärkers — in das Bremsgerät 10 bzw. 110 eingeleitet wird.

Demgemäß umfaßt hier der wiederum insgesamt mit 23 bezeichnete Primär-Ausgangsdruckraum des Bremsgeräts 110 drei Teilräume — den zentralen Teilraum 23′ und die beiden "äußeren" Teilräume 23″, die untereinander kommunizierend verbunden und gemeinsam an den Vorderachs-Bremskreis I angeschlossen sind. Des weiteren umfaßt das Bremsgerät 110 zwei Sekundär-Ausgangsdruckräume 24, die, wie durch eine Verbindungsleitung 179 schematisch angedeutet, ebenfalls kommunizierend miteinander verbunden und gemeinsam an den Hinterachs-Bremskreis II angeschlossen sind.

In entsprechender Duplizität und symmetrischer Anordnung sind zwei dem Antriebskolben 53 des Brems-

11

geräts 10 gemäß Fig. 1 entsprechende Antriebskolben 53 vorgesehen, die an den seitlichen Stützarmen 123 des insgesamt symmetrischen Joches 30 axial abstützbar sind, an dessen zentralem, hier ebenfalls symmetrischen Jochschenkel 122″ der Primärkolben 18 axial abgestützt ist, der den hier zentral angeordneten Teilraum 23′ des Primär-Ausgangsdruckraumes 23 begrenzt, der, in der dargestellten, dem nicht-betätigten Zustand des Bremsgeräts 110 entsprechenden Grundstellung seiner Primär- und Sekundär-Kolbenanordnung über das Zentralventil 129 mit der dem Vorderachs-Bremskreis I zugeordneten Kammer 131 des Bremsflüssigkeits-Vorratsbehälters 132 kommunizierend verbunden ist.

Auch der das Bremsventil 60 enthaltende Antriebskolben 52 ist, entsprechend der Symmetrie des Bremsgeräts 110 zentral angeordnet und greift über das stößelförmige Axialkraft-Übertragungselement 28 zentral an dem symmetrischen Stützschenkel 122 des jochförmigen Axialkraftübertragungselementes an.

Das Bremsgerät 110 gemäß Fig. 3 ist seiner Funktion nach, wie unmittelbar erkennbar, dem Bremsgerät 10 gemäß Fig. 1 völlig analog.

Wegen der symmetrischen Anordnung der Primärkolben 18 und 21 sowie der Sekundärkolben 22 bezüglich der zentralen Achse 41 des Bremsgeräts 110 und der hierzu ebenfalls symmetrischen Anordnung der Antriebskolben 53 sowie symmetrischen Ausbildung des jochförmigen Axialkraft-Übertragungselements 30 wirken auf dieses, falls das Bremsgerät 110 bei einem Ausfall des Bremskraftverstärkers 26 allein mit Pedalkraft betätigt werden muß, keinerlei Querkräfte, im Unterschied zu dem Bremsgerät 10 gemäß Fig. 1, mit der Folge, daß auf relativ aufwendige Axial-Führungselemente für das Joch 30 verzichtet werden kann.

In "erster Näherung", d.h. abgesehen von Abweichungen, die aus Fertigungstoleranzen der Gehäusebohrungen 38 und 51 sowie der Antriebskolben 53 und der "Hauptzylinderkolben" 18, 21 und 22 resultieren können, ist das Joch 30 völlig querkraftfrei. Das Bremsgerät 110 kann daher insgesamt, verglichen mit dem Bremsgerät 10 gemäß Fig. 1 in einer etwas "leichteren" Bauweise realisiert werden, wodurch der mit der symmetrischen Ausbildung des Bremsgeräts 110 verknüpfte technische Zusatzaufwand mindestens zum Teil wieder ausgeglichen werden kann.

Es versteht sich, daß auch das in der Fig. 3 dargestellte Bremsgerät 110 mit der anhand der Fig. 2 mit Bezug auf das Bremsgerät 10 gemäß Fig. 1 geschilderten Abwandlung realisiert werden kann.

Zur Erläuterung eines weiteren, ebenfalls dem Erfindungsgedanken unterfallenden, insgesamt mit 210 bezeichneten Bremsgeräts sei nunmehr auf die diesbezüglichen Einzelheiten der Fig. 4 verwiesen.

Soweit in der Fig. 4 Elemente des Bremsgeräts 210 mit denselben Bezugszeichen belegt sind wie Elemente des Bremsgeräts 10 gemäß Fig. 1 oder Elemente des Bremsgeräts 110 gemäß Fig. 3, soll hierdurch wiederum auf deren prinzipielle Baugleichheit und Funktionsanalogie hingewiesen und auch auf die diesbezüglichen Beschreibungsteile zu den Fig. 1 und 3 verwiesen sein, auch bezüglich solcher Elemente des Bremsgeräts 210 gemäß Fig. 4, für die lediglich Bezugszeichen angegeben, in der nachfolgenden Beschreibung aber nicht eigens erwähnt sind.

Das Bremsgerät 210 gemäß Fig. 4 entspricht hinsichtlich der Aufteilung eines dem Vorderachs-Bremskreis I zugeordneten Primär-Ausgangsdruckraumes 23 in zwei Teilräume 23′ und 23″ und der Tandem-Anordnung des dem Hinterachs-Bremskreis II zugeordneten Sekundär-Ausgangsdruckraumes 24 mit dem Teilraum 23″ des Primär-Ausgangsdruckraumes 23 und gegenüber diesem durch den Schwimmkolben 22 abgegrenzt, dem Bremsgerät gemäß Fig. 1. Die den Primär-Ausgangsdruckraum 23 beweglich begrenzenden Primärkolben 18, 19 und 21 sind mit derselben Gestaltung realisiert wie beim Bremsgerät 10. Dasselbe gilt bezüglich des Sekundärkolbens 22, der in Tandem-Anordnung mit den Kolbenelementen 19 und 21 einerseits den Teilraum 23″ und des Primär-Ausgangsdruckraumes 23 und andererseits den Sekundär-Ausgangsdruckraum 24 des Bremsgeräts 210 innerhalb des Hauptzylinderteils 32 seines Gehäuses 31 druckdicht beweglich begrenzt.

Das jochförmige Axialkraft-Übertragungselement 30 ist hier insoweit symmetrisch ausgebildet, als seine beiden radialen Stützarme 122 und 123 symmetrisch bezüglich der senkrecht auf der Zeichenebene stehenden, die zentrale Längsachse 43′ des Bremsgeräts 210 enthaltende Längsmittelebene 43 desselben angeordnet sind, wobei der eine, gemäß der Darstellung der Fig. 4 obere, Stützarm 122 an dem Primärkolben 18 axial abgestützt ist und der andere Stützarm 123 axial verschiebefest mit dem Tauchkolben 21 verbunden ist.

Auch bei dem Bremsgerät 210 ist das Axialkraft-Übertragungsjoch 30 mittels je eines Führungs-Fortsatzes 119 und 121 in miteinander fluchtenden Führungsbohrungen 117 und 118 des Hauptzylinder-Gehäuseteils 32 bzw. des Verstärkerteils 33 des Bremsgerätgehäuses 31 axial verschiebbar geführt.

Hinsichtlich des grundsätzlichen Aufbaues seines Bremskraftverstärkers 26 entspricht das Bremsgerät 210 gemäß der Fig. 4 dem Bremsgerät 110 mit zwei symmetrisch bezüglich der zentralen, vertikal zur Zeichenebene verlaufenden Längsmittelebene 43 des Bremsgeräts 210 angeordneten Antriebskolben 53, deren zentrale Längsachsen mit den zentralen Längsachsen 41 und 42 der Gehäusebohrungen 37 und 38 des Hauptzylinderteils 32, in denen die Primär- und Sekundärkolben 18, 19 und 21 bzw. 22 des Bremsgeräts 210 druckdicht verschiebbar geführt sind, zusammenfallen, und mit dem das Brensventil 60 enthaltenden zentral angeordneten Antriebskolben 52, der hier an dem verstärkerseitigen Führungsfortsatz 121 des jochförmigen Axialkraft-Übertragungselementes 30 angreift.

Dadurch, daß bei dem Bremsgerät 210 gemäß Fig. 4 — ebenso wie bei dem Bremsgerät 110 gemäß Fig. 3 — insgesamt drei Antriebsdruckräume des Bremskraftverstärkers 26 vorgesehen sind, nämlich der zentrale Antriebsdruckraum 56, der durch den das Bremsventil 60 enthaltenden Antriebskolben axial beweglich begrenzt ist, sowie — in symmetrischer Anordnung bezüglich der zentralen Längsachse 43 — zwei Antriebsdruckräume 57, die axial beweglich durch je einen der beiden Antriebskolben 53 begrenzt sind, können diese Kolben mit vergleichsweise kleineren Querschnittsflächen realisiert werden als bei dem Bremsgerät 10 gemäß Fig. 1, oder es kann als Hilfsdruckquelle für den Bremskraftverstärker 26 eine auf vergleichsweise niedrigem Ausgangsdruckniveau arbeitende Hilfsdruckquelle für die Bremskraftverstärkung verwendet werden.

Das Bremsgerät 210 gemäß Fig. 4 hat gegenüber dem Bremsgerät 10 gemäß Fig. 1 den Vorteil, daß die bei einer Notbetätigung des Bremsgeräts 210, das heißt bei ausgefallenem Bremskraftverstärker 26, auftretenden, auf das Axialkraft-Übertragungselement 30 wirkenden und von dessen Längsführungen 117, 119 bzw. 118, 121 aufzufangenden Querkräfte wesentlich niedriger sind als die im entsprechenden Fehlfunktionsfall beim Bremsgerät 10 gemäß Fig. 1 auftretenden Querkräfte und, verglichen mit diesen, entsprechend der symmetrischen Ausbildung des Antriebsteils des Bremsgeräts 210 nur etwa halb so groß sind.

Abgesehen von diesen für die Notbetätigung vorteilhaften funktionellen "Unterschied" ist das Bremsgerät 210 gemäß Fig. 4 dem Bremsgerät 10 gemäß Fig. 1 funktionell völlig analog.

Es versteht sich, daß bei den Bremsgeräten 110 und 210 gemäß den Fig. 3 und 4 — wegen der in Duplizität vorgesehenen Antriebskolben 53 in symmetrischer Anordnung bezüglich der Längsmittelebene 43 des Bremsgeräts 110 bzw. 210 ein zentraler Antriebskolben 52 nicht erforderlich ist, sondern daß statt eines solchen lediglich ein Bremsventil 60 vorgesehen werden könnte, das in vielfältiger, bekannter Weise realisierbar ist und das lediglich einen zur Pedalkraft $K_P$, mit der der Fahrer das Bremspedal 27 betätigt, proportionalen Antriebsdruck liefert, der in die Antriebsdruckräume 57 eingekoppelt wird, welche durch die Antriebskolben 53 beweglich begrenzt sind, wobei ein derartiges Bremsventil 60 dahingehend gestaltet sein müßte, daß es, wenn die Hilfsdruckquelle 71 ausgefallen ist, die Übertragung der Pedal-Betätigungskraft auf das jochförmige Axialkraft-Übertragungselement 30 ermöglicht, was technisch jedoch keine Schwierigkeiten bildet. Des weiteren versteht es sich, daß die anhand der Fig. 1 bis 6 speziell erläuterten Gestaltungen des Bremsventils 60, des Antriebskolbens 52 sowie der Zentralventile 129 und 157, die in ihren Grundstellungen die kommunizierenden Verbindungen des Primär-Ausgangsdruckraumes 23 sowie des Sekundär-Ausgangsdruckraumes 24 mit den ihnen zugeordneten Kammern 131 bzw. 157 des Bremsflüssigkeits-Vorratsbehälters 132 vermitteln, auch auf andere als die dargestellte Weise realisiert sein können.

Bei einer Bremsanlage, die mit einem Bremsgerät 10, 110 oder 210 ausgerüstet ist, wie anhand der Figuren 1 bis 4 erläutert, ergibt sich, in Verbindung mit der Auslegung der Radbremsen, soweit nicht weitere Bremsdruck-Stellelemente, z.B. Bremskraft-Verteilungsregler, Druckmodulatoren oder dergleichen, vorgesehen sind, eine Festabstimmung der installierten Bremskraftverteilung, derart, daß das Verhältnis $B_{HA}/B_{VA}$ des bei einer Bremsung entfalteten Hinterachs-Bremskraftanteils $B_{HA}$ zu dem bei dieser Bremsung entfalteten Vorderachs-Bremskraftanteil $B_{VA}$ einen festen Wert hat, z.B. den Wert 0,5, was bedeutet, daß 2/3 der jeweils entfalteten Bremskraft an der Vorderachse und 1/3 an der Hinterachse aufgebracht werden.

In einem in der Fig. 5, auf deren Einzelheiten nunmehr zunächst verwiesen sei, dargestellten, insgesamt mit 200 bezeichneten Bremskraft-Verteilungsdiagramm, in dem — in gleichen Einheiten — als Abszisse der auf das Fahrzeuggewicht G bezogene Vorderachs-Bremskraftanteil $B_{VA}/G$ und als Ordinate der ebenfalls auf das Fahrzeuggewicht G bezogene Hinterachs-Bremskraftanteil $B_{HA}/G$ aufgetragen sind, entspricht der genannten — fest abgestimmten — Bremskraftverteilung von 0,5 die Gerade 201, deren Steigung den Wert 0,5 hat.

In einem solchen Diagramm 200 ist die "ideale" Bremskraftverteilung, der bei einer Bremsung gleiche Kraftschluß-Ausnutzung an den Vorderrädern wie an den Hinterrädern des Fahrzeuges entspräche, durch die Parabel 202 repräsentiert, deren Verlauf durch den Fahrzeug-spezifischen Parameter-Achsabstand und die von der Konstruktion des Fahrzeuges sowie von dessen Beladungszustand abhängigen Parameter-Schwerpunktshöhe des Fahrzeuges und Achslastverteilung bestimmt ist.

Die Parabel 202 der idealen Bremskraftverteilung, die im Koordiantenursprung mit einer durch die genannten Parameter bedingten — positiven — Steigung "beginnt", fällt — bei der gewählten Darstellung — zu höheren Werten des Vorderachs-Bremskraftanteils wieder ab und schneidet — wie in der Fig. 5 nicht mehr dargestellt — die Abszisse des Diagramms 200 in einem Punkt, der einer Bremssituation entspricht, in der nur noch über die Vorderradbremsen Bremskraft übertragen werden kann, über die Hinterradbremsen jedoch nicht mehr, da die Hinterachse wegen des bremsdynamischen Verhaltens des Fahrzeuges abzuheben beginnt.

In dem dargestellten Quadranten des Bremskraft-Verteilungsdiagramms 200 sind durch die Parabel 202 die Bereiche stabilen Bremsverhaltens und instabilen Bremsverhaltens gegeneinander abgegrenzt. Für die "unterhalb" der Parabel 202 liegenden Vorderachs-/Hinterachs-Bremskraft-Wertepaare ergibt sich ein stabiles Bremsverhalten des Fahrzeuges, derart, daß die Vorderräder des Fahrzeuges früher blockieren als die Hin-

EP 0 348 648 B1

terräder, falls bei vorgegebener Bremskraft die Kraftschluß-Beiwerte zwischen der Fahrbahn und den Fahrzeugrädern nicht ausreichen, um die Bremskraft zu übertragen. Für "oberhalb" der Parabel 202 liegende Wertepaare der Vorderachs-/Hinterachs-Bremskraftverteilung ist die Hinterachse "überbremst" und es blockieren zuerst die Hinterräder mit der Folge, daß das Fahrzeug zum Ausbrechen neigt, "instabil" wird.

Im Sinne einer auf hinreichende dynamische Stabilität des Fahrzeuges ausgelegten Bremsanlage wird eine — fest abgestimmte — installierte Bremskraftverteilung so getroffen, daß deren Gerade 201 die Parabel 202 in einem Punkt 203 schneidet, der einer kritischen Fahrzeugverzögerung $Z_{krit}$ entspricht, die bei hohen Kraftschlußbeiwerten von 1 allenfalls bei einer Vollbremsung mit höchstmöglicher Bremskraft erreicht werden kann, d.h. bei einer auf das Fahrzeuggewicht bezogenen Bremsverzögerung um 1. Dies bedeutet aber, daß in den weitaus meisten Bremssituationen die Hinterradbremsen nur zu einem wesentlich geringeren Teil ausgenutzt und damit auch belastet werden als es nach der idealen Bremskraftverteilung möglich ware, mithin die Vorderradbremsen relativ stärker belastet werden als die Hinterradbremsen und auch im Teilbremsbereich auf ein erhebliches Maß an Bremsverzögerung, die bei idealer Bremskraftverteilung erzielbar wäre, verzichtet wird.

Um im Teilbremsbereich größere Hinterachs-Bremskraftanteile ausnutzen zu können, ist für Fahrzeuge, die mit einem Antiblockiersystem für sich bekannter Bauart und Funktion ausgerüstet sind, für die anhand der Figuren 1 bis 4 erläuterten"Bremsgeräte 10 und 110 sowie 210 eine ihrem grundsätzlichen Aufbau nach in der Fig. 6, auf deren Einzelheiten nunmehr verwiesen sei, dargestellte, insgesamt mit 180 bezeichnete Umschalteinrichtung vorgesehen, mittels derer das Bremsgerät 10 bzw. 110 oder 210 — umschaltbar — auf zwei verschiedene Werte einer fest abgestimmten Bremskraftverteilung einstellbar ist, deren eine durch die stabilem Bremsverhalten entsprechende Gerade 201 des Diagramms 200 und deren zweite durch die "steilere" Gerade 204 repräsentiert sei, welche die Parabel 202 der idealen Bremskraftverteilung "schon" in einem Punkt 206 schneidet, der beim zur Erläuterung gewählten Auslegungsbeispiel einer Fahrzeugverzögerung von 0,5 entspricht.

Soweit in der Fig. 6 dargestellte Elemente eines Bremsgeräts 10, 110 oder 210 mit denselben Bezugszeichen belegt sind wie in den Fig. 1 bis 4, soll dadurch auf deren prinzipielle Baugleichheit und/oder Funktionsanalogie hingewiesen und auch auf die diesbezüglichen Beschreibungsteile zu diesen Figuren verwiesen sein, auch bezüglich solcher Elemente der Fig. 6, für die lediglich Bezugszeichen angegeben, diese in der nachfolgenden Beschreibung aber nicht eigens erwähnt sind.

Des weiteren soll die Umschalteinrichtung 180, der Einfachheit halber, lediglich für das Bremsgerät 10 gemäß Fig. 1 erläutert werden, auf die, soweit in der nachfolgenden Beschreibung auf in der Fig. 6 nicht dargestellte Elemente verwiesen wird, ebenfalls Bezug genommen sei.

Bei dem dargestellten, speziellen Ausführungsbeispiel der Umschalteinrichtung 180 hat der den Sekundär-Ausgangsdruckraum 24 des Bremsgerats 10 beweglich begrenzende Sekundär-Kolben 22 an seiner dem Teilraum 23″ des Primär-Ausgangsdruckraumes 23 zugewandten Seite zwei in axialem Abstand voneinander angeordnete Kolbenflansche 148′ und 148″ unterschiedlichen Durchmessers D und d, die durch ein stangenförmiges Zwischenstück 181 fest — einstückig — miteinander verbunden sind. Mit dem den größeren Durchmesser D aufweisenden Flansch 148′, der denselben Durchmesser hat wie der Flansch 147, welcher die bewegliche axiale Begrenzung des Sekundär-Ausgangsdruckraumes 24 bildet, ist der Sekundärkolben 22 in demjenigen Abschnitt 38′ entsprechenden Durchmessers D druckdicht verschiebbar geführt, der die gehäusefeste Begrenzung des Nachlaufraumes 154 und des Sekundär-Ausgangsdruckraumes 24 bildet. Zwischen diesem Bohrungsabschnitt 38′ und demjenigen Bohrungsabschnitt 38″, der die gehäusefeste — radiale — Begrenzung des beidseits beweglich begrenzten Teilraumes 23″ des Primär-Ausgangsdruckraumes 23 bildet, vermittelt ein sich dazwischen erstreckender mittlerer Bohrungsabschnitt 38‴ der einen kleineren, dem Durchmesser d des kleineren Kolbenflansches 148″ entsprechenden Durchmesser hat. Die beiden Kolbenflansche 148′ und 148″ sind mittels je einer kolbenfesten Ringdichtung 144′ bzw. 146′ gegen den Bohrungsabschnitt 38′ bzw. 38‴ abgedichtet. In der dem nicht-betätigten Zustand des Bremsgeräts 10 entsprechenden Grundstellung des Sekundärkolbens 22 sind die Kolbenflansche 148′ bzw. 148″ und ihre Ringdichtungen 144′ bzw. 146′ in unmittelbarer Nähe der ringfasenförmigen Gehäusestufen 182 und 183 angeordnet, welche die Bohrungsabschnitte 38′ und 38″ gegen den Bohrungsabschnitt 38‴ des geringeren Durchmessers d absetzen. Die axiale Ausdehnung der mittleren Bohrungsstufe 38‴ bzw. der axiale Abstand der beiden Kolbenflansche 148′ und 148″ ist so groß gewählt, daß der dem Durchmesser nach kleinere Kolbenflansch 148″ innerhalb des gesamten möglichen Druck-Änderungshubes des Sekundärkolbens 22 "innerhalb" der mittleren Bohrungsstufe 38‴ gegen diese abgedichtet bleibt. Zwischen den beiden Kolbenflanschen 148′ und 148″ erstreckt sich ein Ringraum 184, der über ein Bremskraft-Verteilungs-Steuerventil 186 alternativ an den — drucklosen — Bremsflüssigkeits-Vorratsbehälter 132 oder an den Primär-Ausgangsdruckraum 23 bzw. dessen Teilraum 23″ anschließbar ist.

In der — dargestellten — Grundstellung O des Bremskraft-Verteilungs-Steuerventils 186 ist der Ringraum 184 des Bremsgeräts 10 gegen dessen Primär-Ausgangsdruckraum 23 abgesperrt, jedoch mit dem Bremsflüssigkeits-Vorratsbehälter 132 verbunden und dadurch druckentlastet. In dieser Funktionsstellung O des

<div align="center">14</div>

Bremskraft-Verteilungs-Steuerventils 186 ist bei einer Bremsung die auf den Sekundärkolben 22 im Sinne eines Bremsdruck-Aufbaues in dem Sekundär-Ausgangsdruckraum 24 wirkende Kraft durch die Beziehung :

$$K_{s1} = P_{PA} \cdot F_7$$

gegeben, wobei mit $P_{PA}$ der im Primär-Ausgangsdruckraum 23 herrschende Druck bezeichnet ist, der als Bremsdruck in den Vorderachs-Bremskreis I eingekoppelt wird und mit $F_7$ die wirksame Querschnittsfläche des kleineren Kolbenflansches 148″ bezeichnet ist, der den Ringraum 148 gegen den Teilraum 23″ des Primär-Ausgangsdruckraumes 23 des Bremsgeräts 10 abgrenzt.

In dieser Funktionsstellung O des Bremskraft-Verteilungs-Steuerventils 186 ist das Bremsgerät 10 auf die in der Figur 5 durch die Gerade 201 repräsentierte "stabile" Bremskraftverteilung eingestellt.

In der erregten Stellung I des Bremskraft-Verteilungs-Steuerventils 186 ist der Ringraum 184 gegen den Bremsflüssigkeits-Vorratsbehälter 132 abgesperrt, dafür aber über den Durchflußpfad 187 des Bremskraft-Verteilungs-Steuerventils 186 kommunizierend mit dem Primär-Ausgangsdruckraum 23 des Bremsgeräts 10 verbunden, so daß der in dem Primär-Ausgangsdruckraum 23 herrschende Druck $P_{PA}$ nunmehr auch in den Ringraum 184 eingekoppelt ist.

In der erregten Stellung I des Bremskraft-Verteilungs-Steuerventils 186 ist somit — bei einer Bremsung — die auf den Sekundärkolben 22 im Sinne eines Bremsdruck-Aufbaues im Sekundär-Ausgangsdruckraum 24 wirkende Kraft $K_{s1}$ durch die Beziehung :

$$K_{s1} = P_{PA} \cdot F_1$$

gegeben, die um den Faktor $D^2/d^2$ größer ist als die in der Grundstellung O des Bremskraft-Verteilungs-Steuerventils 186 auf den Sekundärkolben 22 wirkende Kraft $K_{s1}$ ist.

In der erregten Stellung I des Bremskraft-Verteilungs-Steuerventils 186 ist das Bremsgerät 10 somit auf eine im Teilbremsbereich für die Ausnutzung eines höheren Hinterachs-Bremskraftanteils ermöglichende Bremskraft-Verteilung eingestellt, die in der Fig. 5 durch die "instabile" Bremskraftverteilung entsprechender Gerade 204 repräsentiert ist.

Eine einfache, die zweckgerechte Ausnutzung der beiden verschiedenen Bremskraft-Verteilungen ermöglichende Art der Ansteuerung des Bremskraft-Verteilungs-Steuerventils 186 ist die folgende :
solange das Bremsgerat nicht betätigt ist, befindet sich das Bremskraft-Verteilungs-Steuerventil 186 in seiner dargestellten Grundstellung O. Mit dem Beginn einer Bremsung wird es, ausgelöst z.B. durch das Ansprechen eines nicht dargestellten Bremslichtschalters in seine erregte Stellung I umgeschaltet, mit der die instabile Bremskraftverteilung 204 verknüpft ist. Spricht im Verlauf der Bremsung das Antiblockiersystem an, so wird durch ein dafür charakteristisches Ausgangssignal einer nicht dargestellten elektronischen Steuereinheit des Antiblockiersystems die Ansteuerung des Bremskraft-Verteilungs-Steuerventils 186 wieder aufgehoben das dann, solange das Antiblockiersystem aktiviert ist, in seine Grundstellung O zurückfällt, die der "stabilen" Bremskraftverteilung 201 entspricht.

Eine für diese Art der Ansteuerung des Bremskraft-Verteilungs-Steuerventils 186 geeignete Steuereinheit ist prinzipiell mittels eines UND-Verknüpfungsgliedes 188 realisierbar, das einen nicht negierten, ersten Steuereingang 189 hat, dem als Steuersignal das Bremslichtschalter-Ausgangssignal zugeleitet ist sowie einen negierten, zweiten Steuereingang 191, dem als Eingangssignal ein für das Ansprechen des Antiblockiersystems charakteristisches Ausgangssignal einer nicht dargestellten elektronischen Steuereinheit des Antiblockiersystems zugeleitet ist.

Eine weitere Möglichkeit der Ansteuerschaltungslogik für das Bremskraft-Verteilungs-Steuerventil 186 besteht darin, daß das Ventil 186 ausschließlich beim Auftreten eines Fehlers im Antiblockiersystem in seine Grundstellung zurückgeschaltet wird.

## Patentansprüche

1. Bremsgerat (10) für ein Straßenfahrzeug mit hydraulischer Zweikreis-Bremsanlage (11), die einen statischen Vorderachs-Bremskreis (I) und einen statischen Hinterachs-Bremskreis (II) umfaßt, die an einen Primär-Ausgangsdruckraum (23) bzw. einen Sekundär-Ausgangsdruckraum (27) des Bremsgeräts (10) angeschlossen sind, in denen, gesteuert durch die Betätigungskraft $K_P$, mit der der Fahrer ein Bremspedal (27) betätigt, Bremsdruck aufbaubar und auf einen mit der Betätigungskraft korrelierten Wert einstellbar ist, mit einem hydraulischen Bremskraftverstärker (26), der ein Bremsventil (60) umfaßt, das einen zu der Pedalkraft $K_P$ proportionalen Ausgangsdruck erzeugt, der in mindestens einen Antriebsdruckraum (56, 57) einkoppelbar ist, der durch einen Antriebskolben (52) des Bremskraftverstärkers (26) axial beweglich begrenzt ist, dessen aus dieser Druckbeaufschlagung resultierende Verschiebung über mindestens ein Axialkraft-Übertragungselement (28, 29, 30) auf die Kolbenelemente einer die einseitige bewegliche Abgrenzung des Primär-Ausgangsdruckraumes (23) bildende Primärkolbenanordnung (18, 19, 21) übertragbar ist, wodurch diese unmittelbar und ein den Sekundär-Ausgangsdruckraum (24) einseitig beweglich begrenzender Sekundär-Kolben (22) — durch den Druckaufbau im Primär-Ausgangsdruckraum (23) — mittelbar eine Verschiebung in eine mit dem eingesteuerten Bremskraft-Erwartungswert verknüpfte Position erfahren, wobei das Gehäuse (31) zwei zueinander parallele Gehäusebohrungen (37, 38) umfaßt, in deren einer (38) der den Sekundär-Ausgangsdruckraum (24) beweglich begrenzende Sekundär-Kolben (22) druckdicht verschiebbar angeordnet ist, und in deren anderer (37) mindestens ein Kolbenelement (18) der Primärkolben-Anordnung druckdicht verschiebbar geführt ist, durch dessen wirksame Querschnittsfläche ein dieser entsprechender Teilquerschnitt des Primär-Ausgangsdruckraumes (23) begrenzt ist, und wobei die Primärkolben-Anordnung ein Kolbenelement (19) umfaßt, das bei einem Ausfall des Bremskraftverstärkers (26) in einer dem nichtbetätigten Zustand des Bremsgeräts entsprechenden Grundstellung verharrt und das mit dem Bremspedal (27) kraft-formschlüssig bewegungsgekoppelt ist und — bei einem Ausfall des Vorderachs-Bremskreises (I) — an einem Kolbenelement (21) axial abstützbar ist, durch dessen axiale Verschiebung Bremsdruck im Sekundär-Ausgangsdruckraum (24) aufbaubar ist, gekennzeichnet durch die folgenden Merkmale :

a₁) der Primär-Ausgangsdruckraum (23) umfaßt einen ersten Teilraum (23′), der einseitig beweglich durch ein erstes Kolbenelement (18) der Primärkolben-Anordnung (18, 19, 21), im übrigen gehäusefest durch die eine axiale Bohrung (37) des Gehäuses (31) begrenzt ist, sowie

a₂) einen zweiten mit dem ersten Teilraum (23′) in ständig-kommunizierender Verbindung stehenden Teilraum (23″), der innerhalb der zweiten Gehäusebohrung (38) axial beidseitig beweglich begrenzt ist, zum einen durch den Sekundär-Kolben (22) und zum anderen durch zwei druckdicht gegeneinander verschiebbare Kolbenelemente (19 und 21) der Primärkolben-Anordnung (18, 19, 21), deren eines als Ringkolben (19) ausgebildet ist, der gegen die Gehäusebohrung (38) verschiebbar abgedichtet ist, und deren zweites als Tauchkolben (21) ausgebildet ist, der in einer axialen Durchgangsbohrung (47) des Ringkolbens (19) druckdicht verschiebbar angeordnet ist ;

b₁) es ist ein erstes, jochförmiges Axialkraft-Übertragungselement (30) vorgesehen, das eine kraftformschlüssige Bewegungskopplung des den ersten Teilraum (23′) des Primär-Ausgangsdruckraumes (23) begrenzenden Primärkolbens (18) mit nur einem der beiden Kolbenelemente (19 bzw. 21) vermittelt, die den zweiten Teilraum (23″) des Primär-Ausgangsdruckraumes (23) einseitig beweglich begrenzen;

b₂) es ist ein zweites Axialkraft-Übertragungselement (29) vorgesehen, das die kraft-formschlüssige Bewegungskopplung des anderen Kolbenelements (21 bzw. 19) der den zweiten Teilraum (23″) begrenzenden Primärkolbenelemente (19 und 21) mit dem Antriebskolben (53) des Bremskraftverstärkers (26) vermittelt und

b₃) es ist ein drittes Axialkraft-Übertragungselement (28) vorgesehen, über das bei einem Ausfall des Bremskraftverstärkers (26) die mittels des Bremspedals (27) ausübbare Betätigungskraft auf das jochförmige Axialkraft-Übertragungselement (30) direkt wirkt.

2. Bremsgerät nach Anspruch 1, dadurch gekennzeichnet, daß in koaxialer Anordnung mit demjenigen Kolbenelement (18), das den ersten Teilraum (23′) des Primär-Ausgangsdruckraumes (23) beweglich begrenzt, ein weiterer Antriebskolben (52) vorgesehen ist, der an dem jochförmigen Axialkraft-Übertragungselement (30) abstützbar ist.

3. Bremsgerät nach Anspruch 2, dadurch gekennzeichnet, daß das Bremsventil (60) des Bremskraftverstärkers (26) an dessen Ventilkörper (86) das Bremspedal (27) über eine am Gehäuse (31) des Bremsgeräts (10 ; 110 ; 210) in axialer Richtung verschiebbar geführte Druckstange (98) angreift, in den weiteren Antriebskolben (52) integriert ist und daß Anschläge (104, 111, 114) vorgesehen sind, durch die Relativbewegungen der Druckstange (98) gegenüber dem Antriebskolben (52) auf einen Wert begrenzt sind, der mindestens und etwa gleich dem maximalen Öffnungshub des Bremsventils (60) ist, der seinerseits nur einem kleinen Bruchteil des Bremsdruck-Aufbauhubes des Antriebskolbens (52) und der Primärkolben-Elemente (18, 19 und 21) entspricht.

4. Bremsgerät nach Anspruch 2 oder Anspruch 3, dadurch gekennzeichnet, daß das jochförmige Axialkraft-Übertragungselement (30) mit kolbenförmigen Führungsfortsätzen (119 und 121) in miteinander fluchtenden Führungsbohrungen (117 und 118) des Bremsgerätgehäuses (31) in axialer Richtung verschiebbar geführt sind.

5. Bremsgerät nach Anspruch 4, dadurch gekennzeichnet, daß das Bremsventilgehäuse (31) ein blockförmiges Hauptzylinderteil (32) und ein ebenfalls blockförmiges Verstärkerteil umfaßt, deren Trennfuge (34) innerhalb eines Leckölraumes (79) verläuft, der mit der Außenatmosphäre in kommunizierender Verbindung steht, wobei das jochförmige Axialkraft-Übertragungselement (30) innerhalb dieses Leckölraumes (79) angeordnet und zwischen seinen dem nichtbetätigten Zustand des Bremsgeräts (10 ; 110 ; 210) und dem mit maximaler Bremskraft verknüpften Betätigungszustand entsprechenden Positionen verschiebbar ist.

6. Bremsgerät nach einem der vorhergehenden Ansprüche 2 bis 5, dadurch gekennzeichnet, daß das Verhältnis $F_4/F_5$ der Querschnittsfläche $F_4$ des den ersten Teilraum (23″) des Primär-Ausgangsdruckraumes (23) beweglich begrenzenden Primärkolbens (18) zur Gesamtquerschnittsfläche $F_5$ der den zweiten Teilraum (23′) des Primär-Ausgangsdruckraumes (23) insgesamt beweglich begrenzenden Primärkolbenelemente (19 und 21) gleich dem Verhältnis $F_2/F_3$ der Flächen $F_2$ und $F_3$ derjenigen Antriebskolben (52 bzw. 53) ist, die über das Axialkraft-Übertragungselement (30) axial an dem bzw. den jeweiligen Primärkolben (18 bzw. 19 und 21) abgestützt sind.

7. Bremsgerät nach einem der vorhergehenden Ansprüche, dadurch gekennzeichnet, daß in symmetrischer Anordnung bezüglich der zentralen Längsachse (43′) des lediglich durch den einen Primärkolben (18) begrenzten Teilraumes (23′) des Primär-Ausgangsdruckraumes (23) zwei Gehäusebohrungen (38) in das blockförmige Hauptzylinderteil (32) eingebracht sind, innerhalb derer durch je einen Schwimmkolben (22) und ein ringkolbenförmiges sowie ein tauchkolbenförmiges Primärkolben-Element (19 bzw. 21) insgesamt zwei Sekundär-Ausgangsdruck-Teilräume (24) und zwei Primär-Ausgangsdruck-Teilräume (23″) in Tandem-Anordnung vorgesehen sind, wobei die Sekundär-Ausgangsdruck-Teilräume miteinander kommunizierend verbunden sind und beide Teilräume (23″) des Primär-Ausgangsdruckraumes (23) mit dessen durch den zentral angeordneten Kolben (18) begrenztem Teilraum (23′) verbunden sind, und daß die über die mit dem Bremspedal (27) bewegungsgekoppelte Druckstange (98) steuerbare oder ausübbare axiale Betätigungskraft zentral über das — symmetrisch ausgebildete — jochförmige Axialkraft-Übertragungselement (30) auf den den zentralen Teilraum (23′) begrenzenden Primärkolben (18) und über radiale Stützarme (123) auf je einen der beiden symmetrisch angeordneten Primärkolbenelemente (19 oder 21) wirkt (Fig. 3).

8. Bremsgerät nach Anspruch 2, dadurch gekennzeichnet, daß die mittels des Bremspedals (27) steuerbare oder — bei einem Ausfall der Bremskraftverstärkung — ausübbare Betätigungskraft entlang der zwischen den zentralen Längsachsen (41 und 42) der Gehäusebohrungen (37 und 38) und parallel zu diesen verlaufenden gemeinsamen zentralen Längsachse (43′) der Führungsfortsätze (119 und 121) des jochförmigen Axialkraft-Übertragungselements (30) angreift (Fig. 4).

9. Bremsgerät nach Anspruch 7 oder Anspruch 8, dadurch gekennzeichnet, daß zusätzlich zu den beiden Antriebskolben (53) die koaxial mit den zentralen Längsachsen (41 und/oder 42) der die Ausgangsdruckräume (23 und 24) des Bremsgeräts (110 ; 210) begrenzende Kolben angeordnet sind, ein dritter mit der die Angriffsrichtung der mit dem Bremspedal ausübbaren Betätigungskraft markierenden zentralen Achse (43′) koaxialer Antriebskolben (52) vorgesehen ist, der das Bremsventil (60) des Bremskraftverstärkers (26) enthält und über den verstärkerseitigen Führungsfortsatz (121) des jochförmigen Axialkraft-Übertragungselements (30) an diesem angreift.

10. Bremsgerät nach einem der vorhergehenden Ansprüche, dadurch gekennzeichnet, daß das jochförmige Axialkraft-Übertragungselement (30) jeweils über einen radialen Stützarm (123) an dem Tauchkolben (21) der den zweiten bzw. dritten Teilraum (23″) des Primär-Ausgangsdruckraumes (23) des Bremsgeräts (10 ; 110 ; 210) einseitig begrenzenden Primärkolbenanordnung (19, 21) angreift, wobei der Tauchkolben (21) verschiebefest mit dem jochförmigen Axialkraft-Übertragungselement (30) verbunden ist, und daß der Ringkolben (19) über seitlich an dem Stützarm (123) vorbeitretende, stößelförmige Axialkraft-Übertragungselemente (29) direkt am Antriebskolben (53) des Bremskraftverstärkers (26) abstützbar ist.

11. Bremsgerät nach einem der vorhergehenden Ansprüche, dadurch gekennzeichnet, daß das jochförmige Axialkraft-Übertragungselement (30) jeweils über einen radialen Stützarm (123′) an dem Ringkolben (21′) der den zweiten und/oder dritten Teilraum (23″) des Primär-Ausgangsdruckraumes (23) des Bremsgeräts (10; 110 ; 210) einseitig begrenzenden Primärkolbenanordnung (19′, 21′) angreift, während der Tauchkolben (19′) dieser Primärkolbenanordnung (19′, 21′) durch eine Bohrung (177) des Stützarmes (123′) des jochförmigen Axialkraft-Übertragungselements (30) axial hindurchtretend mit dem Antriebskolben (53) verschiebefest bewegungsgekoppelt ist. (Fig. 2)

12. Bremsgerät nach Anspruch 10, dadurch gekennzeichnet, daß in der im nichtbetätigten Zustand des Bremsgeräts (10 ; 110 ; 210) entsprechenden Grundstellung seiner Kolben und Axialkraft-Übertragungselemente gesehen, das druckraumseitige freie Ende des Tauchkolbens (21), mit dem dieser bei einem gemeinsamen Ausfall des Bremskraftverstärkers (26) und des Vorderachs-Bremskreises (I) am Sekundärkolben (22) abstützbar ist, in einem größeren axialen Abstand von dem dem Primär-Ausgangsdruckraum (23) zugewandten Kolbenflansch (148) des Sekundärkolbens (22) angeordnet ist als ein auf diesem zuweisender Stirnfortsatz (176) des Ringkolbens (19).

13. Bremsgerät nach Anspruch 11, dadurch gekennzeichnet, daß in der dem nichtbetätigten Zustand des Bremsgeräts (10 ; 110 ; 210) entsprechenden Grundstellung seiner Kolben und Axialkraft-Übertragungselemente gesehen, das druckraumseitige freie Ende des Tauchkolbens (19′) mit dem dieser bei einem Ausfall des Vorderachs-Bremskreises I am Sekundärkolben (22) abstützbar ist, in einem kleineren axialen Abstand von dem Sekundär-Kolben (22) angeordnet ist als ein auf diesen zuweisender Stirnfortsatz (176′) des Ringkolbens (21′), mit dem dieser bei einem Ausfall des Bremskraftverstärkers (26) erforderlichenfalls an dem Sekundärkolben (22) abstützbar ist.

14. Bremsgerät nach einem der vorhergehenden Ansprüche, dadurch gekennzeichnet, daß eine Umschalteinrichtung (180) vorgesehen ist, mittels derer das Bremsgerät (10 ; 110 ; 210) von einem ersten Wert einer im Sinne einer Festabstimmung getroffenen Vorderachs-/Hinterachs-Bremskraftverteilung, die im Sinne möglichst hoher dynamischer Stabilität des Fahrzeuges bei einer Bremsung gewählt ist, auf einen zweiten Wert der Vorderachs-/Hinterachs-Bremskraftverteilung umschaltbar ist, bei der der Hinterachs-Bremskraftanteil höher ist.

15. Bremsgerät nach Anspruch 14 für ein Fahrzeug, das auch mit einem Antiblockier-System ausgerüstet ist, dadurch gekennzeichnet,daß das Bremsgerät mit Betätigung des Bremspedals auf den dem höheren Hinterachs-Bremskraft-Anteil entsprechenden Wert der installierten Bremskraftverteilung umgeschaltet und bei einem Ansprechen der Antiblockierregelung auf den höherer dynamischer Stabilität entsprechenden Wert der Bremskraftverteilung zurückgeschaltet wird.

16. Bremsgerät nach Anspruch 15, dadurch gekennzeichnet, daß die Umschalteinrichtung (180) bei einem Ausfall des Antiblockiersystems auf den höherer dynamischer Stabilität entsprechenden Wert der Vorderachs-/Hinterachs-Bremskraftverteilung zurückschaltet.

17. Bremsgerät nach einem der vorhergehenden Ansprüche 14 bis 16, dadurch gekennzeichnet, daß diejenige Bohrung (38) des Gehäuses (31), in der in Tandem-Anordnung der Sekundärkolben (22) und der Ringkolben (19 bzw. 21′) der Primärkolbenanordnung (19, 21 bzw. 21′,19′) druckdicht verschiebbar geführt sind, zwischen einem die gehäusefeste radiale Begrenzung des Sekundär-Ausgangsdruckraumes (24) bildenden Bohrungsabschnitt (38′) und einem die radial gehäusefeste Begrenzung des koaxial mit dem Sekundär-Ausgangsdruckraum (24) angeordneten Teilraumes (23″) des Primär-Ausgangsdruckraumes (23) bildenden Bohrungsabschnitt (38″) einen Mittelabschnitt (38‴) hat, dessen Durchmesser d kleiner ist als der Durchmesser D des den Sekundär-Ausgangsdruckraum begrenzenden Bohrungsabschnittes (38′) und auch kleiner als der Durchmesser des die Primär-Kolbenanordnung (19, 21 bzw. 21′, 19′) aufnehmenden Bohrungsabschnittes (38″), daß der Sekundärkolben (22) mit einem in dem mittleren Bohrungabschnitt (38‴) druckdicht verschiebbar geführten Flansch (148″) versehen ist, der die druckdichte Abgrenzung des Primär-Ausgangsdruckraumes (23, 23″) gegen den mittleren Bohrungsabschnitt (38‴) vermittelt, wobei durch diesen Kolbenflansch (148″) und den Kolbenflansch (148′) in axialer Richtung ein sich zwischen diesen Kolbenflanschen erstreckender Ringraum (184) begrenzt ist, daß ein als Magnetventil ausgebildetes Bremskraft-Verteilungs-Steuerventil (186) vorgesehen ist, in dessen Grundstellung der Ringraum (184) gegen den Primär-Ausgangsdruckraum (23) abgesperrt, dafür jedoch zum Bremsflüssigkeits-Vorratsbehälter (132) hin druckentlastet ist, und in dessen erregter Stellung I der Ringraum (184) gegen den Bremsflüssigkeits-Vorratsbehälter (132) abgesperrt, dafür jedoch kommunizierend mit dem Primär-Ausgangsdruckraum (23) des Bremsgeräts (10 ; 110 ; 210) verbunden ist und daß eine elektronische Steuereinheit (188) vorgesehen ist, die ein Signal zur Ansteuerung des Bremskraft-Verteilungs-Steuerventils (186) in dessen erregte Stellung I erzeugt, wenn und solange das Bremsgerät (10 ; 110 ; 210) betätigt ist, das Antiblockiersystem des Fahrzeuges jedoch nicht angesprochen hat.

## Claims

1. Braking device (10) for a road vehicle having a hydraulic dual-circuit brake system (11) comprising a static front axle brake circuit (I) and a static rear axle brake circuit (II) which are connected to, respectively, a primary output pressure chamber (23) and a secondary output pressure chamber (24) of the brake device (10), in which chambers brake pressure, controlled by the actuating force Kp with which the driver actuates a brake pedal (27), can be built up and set at a value which is correlated with the actuating force, and having a hydraulic servo brake (26) comprising a brake valve (60) for generating an output pressure which is proportional to the pedal power Kp and can be introduced into at least one drive pressure chamber (56, 57) which is limited in its axial movement by a driving piston (52) of the hydraulic servo brake (26), the displacement of this piston which results from this pressure impingement being transmittable via at least one axial power transmitting element (28, 29, 30) to the piston elements of a primary piston arrangement (18, 19, 21) which forms the one-sided movable boundary of the primary output pressure chamber (23), whereupon this piston arrangement undergoes directly and a secondary piston (22), which forms a one-sided movable boundary of the secondary output pressure chamber (24), undergoes indirectly — because of the pressure build-up in the primary output pressure chamber (23) — a displacement into the position which is linked with the controlled brake power expectation value, the housing (31) comprising two housing bores (37, 38) parallel to one another, in one (38) of which bores the secondary piston (22) which forms the movable boundary of the secondary output pressure chamber (24) is in a pressure-sealed displaceable arrangement and in the other bore (37) of which at least one pressure-sealed piston element (18) of the primary piston arrangement is displaceably guided, the effective cross-sectional area of which piston element defines a partial cross-section — corresponding thereto — of the primary output pressure chamber (23), and the primary piston arrangement comprising a piston element (19) which, in the event of a failure of the servo brake, remains in an initial position corresponding to the non-actuated state of the brake gear and which is frictionally/positively connected for movement to the brake pedal (27) and — in the event of a failure of the front-axle brake circuit (I) — can be axially supported on a piston element (21), the axial displacement of which can cause a build-up of brake pressure in the secondary output pressure chamber (24), characterised by the following features :

$a_1$)     the primary output pressure chamber (23) comprises a first chamber section (23′) which on one side has a movable boundary defined by a first piston element (18) of the primary piston arrangement (18, 19, 21) and otherwise has a fixed boundary defined by the first axial bore (37) of the housing (31), and

$a_2$)     a second chamber section (23″) which is in constant communication with the first chamber section (23′) and which, inside the second housing bore (38), has a movable boundary defined axially in both directions, firstly by the secondary piston (22) and secondly by two pressure-sealed piston elements (19 and 21) of the primary piston arrangement (18, 19, 21) which are displaceable towards one another and the first of which is in the form of an annular piston (19) which is sealed so as to be displaceable towards the housing bore (38), and the second of which is in the form of a trunk piston (21) which is pressure-sealed and arranged so as to be displaceable in an axial through hole (47) of the annular piston (19) ;

$b_1$)     there is provided a first yoke-shaped axial power transmitting element (30) which creates a frictional/positive motional connection between the primary piston (18), which delimits the first chamber section (23′) of the primary output pressure chamber (23), and only one of the two piston elements (19 or 21) which form on one side the movable boundary of the second chamber section (23″) of the primary output pressure chamber (23) ;

$b_2$)     there is provided a second axial power transmitting element (29) which creates the frictional/positive motional connection between the other piston element (21 or 19) of the primary piston elements (19 and 21) which define the second chamber section (23″), and the driving piston (53) of the servo brake (26), and

$b_3$)     there is provided a third axial power transmitting element (28) through which the actuating force which can be exerted by means of the brake pedal (27) acts directly upon the yoke-shaped axial power transmitting element (30) in the event of failure of the servo brake (26).

2. Braking device according to Claim 1, characterised in that another driving piston (52), which can be supported on the yoke-shaped axial power transmitting element (30), is in a coaxial arrangement with that piston element (18) which forms the movable boundary of the first chamber section (23′) of the primary output pressure chamber (23).

3. Braking device according to Claim 2, characterised in that the brake valve (60) of the servo brake (26), on the valve body (86) of which the brake pedal (27) engages via a push rod (98) guided so as to be axially displaceable on the housing (31) of the braking device (10 ; 110 ; 210), is integrated in the other driving piston (52), and that there are provided stops (104, 111, 114) whereby movements of the push rod (98) relative to the driving piston (52) are limited to a value at least and approximately equal to the maximum opening stroke of the brake valve (60) which, in turn, corresponds to only a small fraction of the brake pressure build-up stroke of the driving piston (52) and primary piston elements (18, 19 and 21).

4. Braking device according to Claim 2 or Claim 3, characterised in that the yoke-shaped axial power transmitting element (30) is guided with piston-shaped guide extensions (119 and 121) so as to be axially displaceable in aligned guide bores (117 and 118) in the braking device housing (31).

5. Braking device according to Claim 4, characterised in that the brake valve housing (31) comprises a block-shaped master cylinder component (32) and a likewise block-shaped power assist component, the parting line (34) of which runs inside an oil leakage chamber (79) which is in communication with the outside atmosphere, the yoke-shaped axial power transmitting element (30) being arranged inside this oil leakage chamber (30) and being displaceable between its positions which correspond to the non-actuated state of the braking device (10 ; 110 ; 210) and the operational state associated with maximum brake power.

6. Braking device according to any one of the preceding Claims 2 to 5, characterised in that the ration $F_4/F_5$ of the cross-sectional area $F_4$ of the primary piston (18) — which forms the movable boundary of the first chamber section (23″) of the primary output pressure chamber (23) — to the total cross-sectional area $F_5$ of the primary piston elements (19 and 21) which together form the movable boundary of the second chamber section (23′) of the primary output pressure chamber (23), is equal to the ration $F_2/F_3$ of the areas $F_2$ and $F_3$ of those driving pistons (52 or 53) which are supported axially on, respectively, the primary piston or primary pistons (18 or 19 and 21) by way of the axial power transmitting element (30).

7. Braking device according to any one of the preceding Claims, characterised in that two housing bores (38), arranged symmetrically relative to the central longitudinal axis (43′) of that chamber section (23′) of the primary output pressure chamber (23) which is defined only by the first primary piston (18), are introduced into the block-shaped master cylinder component (32), inside which bores a total of two secondary output pressure chamber sections (24) and two primary output pressure chamber sections (23″) are formed in tandem arrangement by a floating piston (22) and an annular-piston shaped and a trunk-piston shaped primary piston element (19 and 21, respectively), the secondary output pressure chamber sections being in communication with one another and both chamber sections (23″) of the primary output pressure chamber (23) being connected to its chamber section (23′) which is defined by the centrally arranged piston (18), and that the axial actuating force, which can be controlled or exerted via the push rod (98) which provides a motional connection with the brake pedal (27), is transmitted centrally via the — symmetrically designed — yoke-shaped axial power transmitting element (30) to the primary piston (18) which defines the central chamber section (23′), and via radial support arms (123) to each of the two symmetrically arranged primary piston elements (19 or 21) (Fig. 3).

8. Braking device according to Claim 2, characterised in that the actuating force, which can be controlled or — in the event of failure of the servo brake action — can be exerted by means of the brake pedal (27), is transmitted along the common central longitudinal axis (43′) of the guide extensions (119 and 121) of the yoke-shaped axial power transmitting element (30), which axis runs between and parallel to the central longitudinal axes (41 and 42) of the housing bores (37 and 38) (Fig. 4).

9. Braking device according to Claim 7 or Claim 8, characterised in that in addition to the two driving pistons (53) which are arranged coaxially with the central longitudinal axes (41 and/or 42) of the pistons defining the output pressure chambers (23 and 24) of the braking device (110 ; 210), there is provided a third driving piston (52) which is coaxial with the central axis (43′) indicating the transmitting direction of the actuating force which can be exerted by the brake pedal, and which contains the brake valve (60) of the servo brake (26) and engages on the latter by way of the guide extension (121) — on the servo brake side — of the yoke-shaped axial power transmitting element (30).

10. Braking device according to any one of the preceding Claims, characterised in that the yoke-shaped axial power transmitting element (30) bears, by way of each radial support arm (123), against the trunk piston (21) of the primary piston arrangement (19, 21) which on one side bounds the second or third chamber section (23″) of the primary output pressure chamber (23) of the braking device (10 ; 110 ; 210), the trunk piston (21) being rigidly connected to the yoke-shaped axial power transmitting element (30), and that the annular piston (19) can be supported directly on the driving piston (53) of the servo brake (26) by way of tappet-shaped axial power transmitting elements (29) extending laterally past the support arm (123).

11. Braking device according to any one of the preceding Claims, characterised in that the yoke-shaped axial power transmitting element (30) bears, by way of each radial support arm (123′), against the annular piston (21′) of the primary piston arrangement (19′, 21′) which on one side bounds the second and/or third chamber section (23″) of the primary output pressure chamber (23) of the braking device (10 ; 110 ; 210), whilst the trunk piston (19′) of this primary piston arrangement (19′, 21′), which passes axially through a bore (177) in the support arm (123′) of the yoke -shaped axial power transmitting element (30), is rigidly connected to the driving piston (53) for movement. (Fig. 2)

12. Braking device according to Claim 10, characterised in that, when the braking device (10 ; 110 ; 210) is seen with its pistons and axial power transmitting elements in the initial position corresponding to the non-actuated state of the device, the free end — on the pressure chamber side — of the trunk piston (21), by which the latter can be supported on the secondary piston (22) in the event of a joint failure of the servo brake (26) and front axle brake circuit (I), is arranged at a greater axial distance from that piston flange (148) of the secondary piston (22) facing the primary output pressure chamber (23) than an end extension (176) of the annular piston (19) directed towards this secondary piston.

13. Braking device according to Claim 11, characterised in that, when the braking device (10 ; 110 ; 210) is seen with its pistons and axial power transmitting elements in the initial position corresponding to the non-actuated state of the device, the free end — on the pressure chamber side — of the trunk piston (19′), by which the latter can be supported on the secondary piston (22) in the event of failure of the front axle brake circuit I, is arranged at a shorter axial distance from the secondary piston (22) than an end extension (176′) of the annular piston (21′) directed towards the latter, by which extension this piston can if necessary be supported on the secondary piston (22) in the event of failure of the servo brake (26).

14. Braking device according to any one of the preceding Claims, characterised in that there is provided a switching device (180) by means of which the braking device (10 ; 110 ; 210) can be switched from a first value of a front axle/rear axle brake power distribution, which is applied in the sense of fixed selection and which is selected for the purpose of creating the highest possible dynamic vehicle stability during braking, to a second value of front axle/rear brake power distribution at which the percentage of rear axle brake power is higher.

15. Braking device according to Claim 14 for a vehicle which is equipped also with an antilock system, characterised in that with the actuation of the brake pedal, the braking device is switched to the value of installed brake power distribution corresponding to the higher percentage of rear axle brake power and, when the antilock control system responds, is switched back to the brake power distribution value corresponding to higher dynamic stability.

16. Braking device according to Claim 15, characterised in that in the event of failure of the antilock system, the switching device (180) switches back to the value of front axle/rear axle brake power distribution corresponding to higher dynamic stability.

17. Braking device according to any one of the preceding Claims 14 to 16, characterised in that that bore (38) of the housing (31) in which the secondary piston (22) in tandem with the annular piston (19 or 21') of the primary piston arrangement (19, 21 or 21', 19') are guided in a pressure-sealed displaceable arrangement, has a central section (38") between a bore section (38') which forms the radial boundary — fixed to the housing — of the secondary output pressure chamber (24) and a bore section (38") which forms the radial boundary, fixed to the housing, of the chamber section (23") of the primary output pressure chamber (23) which is arranged coaxially with the secondary output pressure chamber (24), the diameter $\underline{d}$ of this central section being smaller than the diameter D of the bore section (38') which delimits the secondary output pressure chamber and also smaller than the diameter of the bore section (38") which accomodates the primary piston arrangement (19, 21 or 21', 19'), that the secondary piston (22) is provided with a flange (148") which is guided in a pressure-sealed displaceable arrangement in the central section (38"), this piston flange (148") and the piston flange (148') axially defining an annular space (184) extending between these piston flanges, that there is provided a brake power distribution control valve (186) in the form of a solenoid valve, in the initial position of which the annular space (184) is shut off from the primary output pressure chamber (23), but is relieved from pressure in the direction of the brake fluid reservoir (132), and in its excited position I the annular space (184) is shut off from the brake fluid reservoir (132), but is in communication with the primary output pressure chamber (23) of the braking device (10 ; 110 ; 210), and that there is provided an electronic control unit (188) which generates a signal to trigger the brake power distribution control valve (186) into its excited position I when and as long as the braking device (10 ; 110 ; 210) is actuated, but the antilock system of the vehicle has not responded.

## Revendications

1. Dispositif de freinage (10) pour un véhicule routier comprenant d'une part une installation hydraulique (11) de freinage à deux circuits comportant un circuit statique de freinage d'essieu avant (I) et un circuit statique de freinage d'essieu arrière (II), qui sont reliés à une chambre de pression de sortie primaire (23) ou une chambre de pression de sortie secondaire (27) du dispositif de freinage (10), ces chambres étant commandées par la force d'actionnement $K_P$ avec laquelle le conducteur actionne une pédale de frein (27) pour produire une pression de freinage qui peut être réglée à une valeur en corrélation avec la force d'actionnement, et d'autre part un amplificateur hydraulique de force de freinage (26) qui comporte une soupape de freinage (60) produisant une pression de sortie proportionnelle à la force d'actionnement $K_P$ de la pédale et pouvant être appliquée à au moins une chambre de pression d'entraînement (56, 57), dont une limite mobile axialement est définie par un piston d'entraînement (52) de l'amplificateur de force de freinage (26), dont la translation, résultant de cette sollicitation en pression, est transmissible par l'intermédiaire d'au moins un élément de transmission de force axiale (28, 29, 30) aux éléments de piston d'un ensemble formant piston primaire (18, 19, 21) définissant la limite, mobile unilatéralement, de la chambre de pression de sortie primaire (23), de telle sorte qu'un mouvement de translation soit effectué directement par ledit ensemble (18, 19, 21), mais indirectement par un ensemble formant piston secondaire (22), définissant une limite, mobile unilatéralement, de la chambre de pression de sortie secondaire (24), jusque dans une position en relation avec la valeur de réglage de la force de freinage, le carter (31) comportant deux alésages (37, 38) mutuellement parallèles et dans l'un desquels (38) peut coulisser de façon étanche à la pression le piston secondaire (22) définissant la limite mobile de la chambre de pression de sortie secondaire (24) tandis que dans l'autre alésage (37) peut coulisser de façon étanche à la pression au moins un élément de piston (18) de l'ensemble formant piston primaire, dont la section utile délimite une section partielle correspondante de la chambre de pression de sortie primaire (23), ledit ensemble formant piston primaire comportant un élément de piston (19) qui, en cas de panne de l'amplificateur de force de freinage (26), est bloqué dans une position de base, correspondant à l'état non actionné du dispositif de freinage, et qui est accouplé dans son mouvement, par conjugaison de formes et de forces, avec la pédale de frein (27) et qui — en cas de panne du circuit de freinage d'essieu avant (I) — vient s'appuyer axialement contre un élément de piston (21) dont le mouvement de translation axiale peut produire une pression de freinage dans la chambre de pression de sortie secondaire (24), caractérisé par les particularités suivantes :

$a_1$)  la chambre de pression de sortie primaire (23) comporte une première partie de chambre (23′), qui est délimitée d'un côté de façon mobile par un premier élément de piston (18) de l'ensemble formant piston primaire (18, 19, 21), et par ailleurs, de façon fixée par le carter, au moyen d'un des alésages axiaux (37) du carter (31), et également

$a_2$)  une seconde partie de chambre (23″), en communication constante avec la première partie de chambre (23′) et qui est délimitée axialement, de façon mobile des deux côtés, à l'intérieur du second alésage (38) du carter, d'une part par le piston secondaire (22) et d'autre part par deux éléments de piston (19 et 21) de l'ensemble formant piston primaire (18, 19, 21), déplaçables de façon étanche l'un par rapport à l'autre et dont l'un est agencé comme un piston annulaire (19) qui peut coulisser de façon étanche dans l'alésage (38) du carter tandis que le second est agencé comme un piston plongeur (21) qui peut coulisser de façon étanche dans un alésage axial de traversée (47) du piston annulaire (19) ;

$b_1$)  il est prévu un premier élément de transmission de force axiale (30) en forme d'étrier, qui assure un accouplement, par conjugaison de forces et de formes, du piston primaire (18), délimitant la première partie (23′) de la chambre de pression de sortie primaire (23), avec seulement un des deux éléments de piston (19 ou 21), qui délimitent, de façon mobile d'un côté, la seconde partie (23″) de la chambre de pression de sortie primaire (23) ;

$b_2$)  il est prévu un second élément de transmission de force axiale (29), qui assure l'accouplement, par conjugaison de formes et de forces, de l'autre élément (21 ou 19) des éléments de piston primaire (19 et 21) délimitant la seconde partie de chambre (23″) avec le piston d'entraînement (53) de l'amplificateur de force de freinage (26) et

$b_3$)  il est prévu un troisième élément de transmission de force axiale (28), par l'intermédiaire duquel, lors d'une panne de l'amplificateur de force de freinage (26), la force d'actionnement pouvant s'exercer au moyen de la pédale de frein (27) agit directement sur l'élément de transmission de force axiale (30) en forme d'étrier.

2. Dispositif de freinage selon la revendication 1, caractérisé en ce qu'il est prévu, dans une disposition coaxiale avec l'élément de piston (18) qui délimite de façon mobile la première partie (23′) de la chambre de pression de sortie primaire (23), un autre piston d'entraînement (52) qui peut s'appuyer contre l'élément de transmission de force axiale (30) en forme d'étrier.

3. Dispositif de freinage selon la revendication 2, caractérisé en ce que la soupape de freinage (60) de l'amplificateur de force de freinage (26) agit, par son corps (86), sur la pédale de frein (27) par l'intermédiaire d'un poussoir (98), guidé en translation axiale dans le carter (31) du dispositif de freinage (10 ; 110 ; 210) et qui est intégré dans l'autre piston d'entraînement (52), et en ce qu'il est prévu des butées (104, 111, 114) par lesquelles sont limités les mouvements relatifs du poussoir (98) par rapport au piston d'entraînement (52) à une valeur qui est au moins et à peu près égale à la course maximale d'ouverture de la soupape de freinage (60), qui correspond pour sa part seulement à une petite fraction de la course d'établissement de pression de freinage du piston d'entraînement (52) et des éléments de piston primaire (18, 19 et 21).

4. Dispositif de freinage selon la revendication 2 ou la revendication 3, caractérisé en ce que l'élément de transmission de force axiale (30) an forme d'étrier est guidé en translation axiale, par des protubérances de guidage (119 et 121) en forme de têtons, dans des trous correspondants de guidage (117 et 118) du carter (31) du dispositif de freinage.

5. Dispositif de freinage selon la revendication 4, caractérisé en ce que le carter (31) de la soupape de freinage comporte une partie en forme de bloc (32) correspondant au maître-cylindre et une partie également en forme de bloc correspondant à l'amplificateur, le joint de séparation (34) entre lesdites parties étant situé à l'intérieur d'un passage d'huile de fuite (79), qui est en communication avec l'atmosphère extérieure, l'élément de transmission de force axiale (30) en forme d'étrier étant disposé à l'intérieur de ce passage d'huile de fuite (79) et étant mobile en translation entre ses positions correspondant d'une part à l'état non actionné du dispositif de freinage (10 ; 110 ; 210) et à l'état d'actionnement avec la force maximale de freinage.

6. Dispositif de freinage selon une des revendications précédentes 2 à 5, caractérisé en ce que le rapport $F_A/F_5$ de la surface de section $F_4$ du piston primaire (18), délimitant de façon mobile la première partie (23″) de la chambre de pression de sortie primaire (23), et de la surface de section totale $F_5$ des éléments de piston primaire (19 et 21), délimitant de façon mobile la seconde partie (23′) de la chambre de pression de sortie primaire (23), est égal au rapport $F_2/F_3$ des surfaces $F_2$ et $F_3$ des pistons d'entraînement (52 ou 53) qui s'appuient axialement, par l'intermédiaire de l'élément de transmission de force axiale (30), sur le ou les éléments correspondants de piston primaire (18 ou 19 et 21).

7. Dispositif de freinage selon une des revendications précédentes, caractérisé en ce qu'il est prévu, dans une disposition symétrique par rapport à l'axe longitudinal central (43′) de la partie (23′), délimitée seulement par un des pistons primaires (18), de la chambre de sortie de pression primaire (23), deux alésages (38) du carter situés dans la partie en forme de bloc (32) correspondant au maître-cylindre et dans lesquelles sont formées, respectivement par un piston flottant (22) et un élément de piston primaire en forme de piston annulaire ainsi qu'un élément de piston primaire en forme de piston plongeur (19 et 21), au total deux parties de chambre de pression de sortie secondaire (24) et deux parties de chambre de pression de sortie primaire (23″) disposées en tandem, les parties de chambre de pression de sortie secondaire étant en communication l'une avec l'autre et les deux parties (23″) de la chambre de pression de sortie primaire (23) étant reliées avec la partie de chambre (23′) délimité par le piston (18) disposé au centre, et en ce que la force axiale d'actionnement, pouvant être commandée ou exercée par l'intermédiaire du poussoir (98) accouplé à la pédale de frein (27), agit de façon centrée, par l'intermédiaire de l'élément de transmission de force axiale (30) en forme d'étrier — de structure symétrique — sur le piston primaire (18) délimitant la partie centrale de chambre (23′) et, par l'intermédiaire de bras radiaux d'appui (123), sur un élément respectif des deux éléments de piston primaire (19 ou 21) disposés symétriquement (Fig. 3).

8. Dispositif de freinage selon la revendication 2, caractérisé en ce que la force d'actionnement, pouvant être commandée ou exercée — en cas de panne de l'amplificateur de force de freinage — au moyen de la pédale de frein (27), agit le long de l'axe longitudinal central commun (43′), situé entre les axes longitudinaux centraux (41 et 42) des alésages (37 et 38) du carter et parallèlement à ceux-ci, sur des protubérances de guidage (119 et 121) de l'élément de transmission de force axiale (30) en forme d'étrier (Fig. 4).

9. Dispositif de freinage selon la revendication 7 ou la revendication 8, caractérisé en ce que, en addition aux deux pistons d'entraînement (53), qui sont disposés coaxialement aux axes longitudinaux centraux (41 et/ou 42) des pistons délimitant les chambres de pression de sortie (23 et 24) du dispositif de freinage (110 ; 210), il est prévu un troisième piston d'entraînement (52), coaxial avec l'axe central (43′) définissant la direction d'action de la force d'actionnement pouvant être exercée avec la pédale de frein, ce piston d'entraînement (52) contenant la soupape de freinage (60) de l'amplificateur de force de freinage (26) et agissant sur l'élément de transmission de force axiale (30) en forme d'étrier par l'intermédiaire de la protubérance de guidage (121) qui est située du côté de l'amplificateur.

10. Dispositif de freinage selon une des revendications précédentes, caractérisé en ce que l'élément de transmission de force axiale (30) an forme d'étrier agit respectivement, par l'intermédiaire d'un bras radial d'appui (123), sur le piston plongeur (21) de l'ensemble formant piston primaire (19, 21), délimitant d'un côté la seconde ou la troisième partie (23″) de la chambre de pression de sortie primaire (23) du dispositif de freinage (10 ; 110 ; 21), ledit piston plongeur (21) étant relié, sans possibilité de translation relative, avec l'élément de transmission de force axiale (30) en forme d'étrier, et en ce que le piston annulaire (19) peut s'appuyer, par l'intermédiaire d'éléments de transmission de force axiale (29) en forme de poussoirs, se déplaçant latéralement sur le bras d'appui (123), directement contre le piston d'entraînement (53) de l'amplificateur de force de freinage (26).

11. Dispositif de freinage selon une des revendications précédentes, caractérisé en ce que l'élément de transmission de force axiale (30) en forme d'étrier agit respectivement, par l'intermédiaire d'un bras radial d'appui (123′), sur le piston annulaire (21′) de l'ensemble formant piston primaire (19′, 21′), délimitant d'un côté la seconde et/ou la troisième partie (23″) de la chambre de pression de sortie primaire (23) du dispositif de freinage (10 ; 110 ; 210), tandis que le piston plongeur (19′) de cet ensemble formant piston primaire (19′, 21′) est accouplé axialement, sans possibilité de translation, avec le piston d'entraînement (53) à travers un trou (177) du bras d'appui (123′) de l'élément de transmission de force axiale (30) en forme d'étrier.

12. Dispositif de freinage selon la revendication 10, caractérisé en ce que, en considérant la position de base des pistons et des éléments de transmission de force axiale du dispositif de freinage (10 ; 110 ; 210) se trouvant dans l'état non actionné, l'extrémité libre, située côté chambre de pression, du piston plongeur (21), au moyen de laquelle ce piston peut s'appuyer contre le piston secondaire (21) en cas de panne commune de l'amplificateur de force de freinage (26) et du circuit de freinage d'essieu avant (I), est disposée à une plus grande distance d'espacement axial du collet (148) du piston secondaire (22) dirigé vers la chambre de pression de sortie primaire (23) qu'un appendice frontal (176), dirigé vers ce piston secondaire (22), du piston annulaire (19).

13. Dispositif de freinage selon la revendication 11, caractérisé en ce que, dans la position de base des pistons et des éléments de transmission de force axiale du dispositif de freinage (10 ; 110 ; 210) se trouvant dans l'état non actionné, l'extrémité libre, située côté chambre de pression, du piston plongeur (19'), par laquelle celui-ci peut s'appuyer contre le piston secondaire (22) en cas de panne du circuit de freinage d'essieu avant (I), est disposée à une plus petite distance d'espacement axial du piston secondaire (22) qu'un appendice frontal (176') du piston annulaire (21'), dirigé vers le piston secondaire (22) et au moyen duquel le piston annulaire (21') peut s'appuyer, si nécessaire en cas de panne de l'amplificateur de force de freinage (26), contre le piston secondaire (22).

14. Dispositif de freinage selon une des revendications précédentes, caractérisé en ce qu'il est prévu un dispositif de commutation (180) au moyen duquel le dispositif de freinage (10 ; 110 ; 210) peut être commuté depuis une première valeur d'une répartition de forces de freinage entre essieu avant/essieu arrière, qui a été définie dans le sens d'un rapport fixe et qui est choisie dans le sens d'une stabilité dynamique aussi grande que possible du véhicule lors d'un freinage, jusqu'à une seconde valeur de la répartition des forces de freinage entre essieu avant/essieu arrière, pour laquelle le pourcentage de forces de freinage d'essieu arrière est le plus grand.

15. Dispositif de freinage selon la revendication 14, pour un véhicule qui est également équipé d'un système antiblocage, caractérisé en ce que le dispositif de freinage est commuté, lors d'un actionnement de la pédale de frein, à la valeur de la répartition établie de forces de freinage qui correspond au plus grand pourcentage de force de freinage d'essieu arrière alors que, lors d'une réaction du système de régulation anti-blocage, le dispositif de freinage est ramené à la valeur de répartition de forces de freinage correspondant à la plus grande stabilité dynamique.

16. Dispositif de freinage selon la revendication 15, caractérisé en ce que le dispositif de commutation (180) revient, lors d'une panne du système anti-blocage, à la valeur de répartition de forces de freinage entre essieu avant/essieu arrière qui correspond à la plus grande stabilité dynamique.

17. Dispositif de freinage selon une des revendications précédentes 14 à 16, caractérisé en ce que l'alésage correspondant (38) du carter (31), dans lequel sont guidés en translation, de façon étanche à la pression et avec une disposition en tandem, le piston secondaire (22) et le piston annulaire (19 ou 21') de l'ensemble formant piston primaire (19, 21 ou 21', 19'), comporte, entre une partie d'alésage (38') formant la limite radiale fixe de la chambre de pression de sortie secondaire (24) et une partie d'alésage (38''), formant la limite radiale fixe de la partie (23'') de la chambre de pression de sortie primaire (23) qui est disposée coaxialement à la chambre de pression de sortie secondaire (24), une partie centrale (38'''), dont le diamètre d est plus petit que le diamètre D de la partie d'alésage (38') délimitant la chambre de pression de sortie secondaire et également plus petit que le diamètre de la partie d'alésage (38'') recevant l'ensemble formant piston primaire (19, 21 ou 21', 19'), en ce que le piston secondaire (22) est pourvu d'un collet (148''), guidé en translation de façon étanche à la pression dans la partie centrale d'alésage (38''') et définissant la limite, étanche à la pression, de la chambre de pression de sortie primaire (23, 23'') par rapport à la partie centrale d'alésage (38'''), ce collet de piston (148'') ainsi que le collet de piston (148') délimitant dans une direction axiale un volume annulaire (184) s'étendant entre lesdits collets de piston, en ce qu'il est prévu une soupape (186) de commande de répartition de forces de freinage agencée comme une soupape électromagnétique dans la position de base de laquelle le volume annulaire (184) est isolé de la chambre de pression de sortie primaire (23), en étant cependant déchargé en pression vers le réservoir (132) de stockage de liquide de frein tandis que, dans la position d'excitation I de ladite soupape, le volume annulaire (184) est isolé du réservoir (132) de stockage de liquide de frein en étant cependant en communication avec la chambre de pression de sortie primaire (23) du dispositif de freinage (10 ; 110 ; 210), et en ce qu'il est prévu une unité électronique de commande (188) qui produit un signal d'activation de la soupape (186) de commande de répartition de forces de freinage dans la position d'excitation I de laquelle, lorsque et tant que le dispositif de freinage (10 ; 110 ; 210) est actionné, le système antiblocage du véhicule n'a cependant pas réagi.

Fig. 1

Fig. 2

Fig. 3

EP 0 348 648 B1

Fig. 4

EP 0 348 648 B1

**Fig. 5**

**Fig. 6**